# EUROPÄISCHE PATENTANMELDUNG

(11) **EP 3 832 175 A1**
(43) Veröffentlichungstag der Anmeldung: **09.06.2021**
(21) Anmeldenummer: 20209537.8
(22) Anmeldetag: 24.11.2020
(51) Int. Cl.: F16J 15/08, F04D 29/40, F04D 29/08

(54) **SICKENDICHTUNG**

(30) Priorität: 02.12.2019 DE 102019132729
(71) Anmelder: Schwäbische Hüttenwerke Automotive GmbH, 73433 Aalen-Wasseralfingen (DE)
(72) Erfinder: BAUR, Dominik, 72516 Scheer (DE); WELTE, Claus, 88326 Aulendorf (DE); FREY, Jochen, 89275 Elchingen (DE)
(74) Vertreter: SSM Sandmair

(57) **Zusammenfassung**

Sickendichtung zum Abdichten einer axialen Fuge zwischen einem ersten Bauteil (1) und einem zweiten Bauteil (15), die Sickendichtung (S) umfassend:
(a) eine erste Sickenschleife (21), die in einer axialen Sicht einen ersten Innenbereich (22) umgibt und eine Sickenstirnfläche für axialen Kontakt mit einem der Bauteile (1, 15) aufweist,
(b) einen im ersten Innenbereich (22) gelegenen Durchgang (23) für Fluid,
(c) wobei die erste Sickenschleife (21) eine kleinste, den Durchgang (23) umgebende Sickenschleife ist, und
(d) eine erste Versteifungsstruktur (24), die sich in der axialen Sicht von der ersten Sickenschleife (21) in den ersten Innenbereich (22) erstreckt, um die erste Sickenschleife (21) zu versteifen.

## Beschreibung

Die Erfindung betrifft eine Sickendichtung zum Abdichten einer axialen Fuge zwischen einem ersten Bauteil und einem zweiten Bauteil. Ferner betrifft die Erfindung eine Pumpe, wie etwa eine Schmierölpumpe, Kühlmittelpumpe, Getriebepumpe oder Vakuumpumpe, mit einer Dichtung zur Abdichtung eines Fluidauslasses oder einer Förderkammer der Pumpe. Die Pumpe kann einflutig oder mehrflutig, insbesondere mehrkreisig sein. Sie kann als Getriebepumpe zur Versorgung eines Getriebes, beispielsweise eines Automatikgetriebes oder Lenkgetriebes eines Fahrzeugs oder eines Getriebes einer Windkraftanlage, mit Druckfluid verwendet werden. In einer anderen Verwendung kann sie als Schmier- und/oder Kühlmittelpumpe zur Versorgung einer Brennkraftmaschine, beispielsweise eines Antriebsmotors eines Fahrzeugs, mit Schmier- und/oder Kühlmittel, insbesondere Schmieröl, verwendet werden. Eine kombinierte Verwendung als Schmierölpumpe und als Getriebepumpe ist ebenfalls denkbar, insbesondere in Ausgestaltungen, in denen die Pumpe mehrflutig ist. Die Pumpe kann vorteilhafterweise in Cartridge-Bauweise ausgeführt sein. Des Weiteren kann die Pumpe zur Schmierung und/oder Kühlung eines Elektromotors, der beispielsweise einen Antriebsmotor oder Hilfsantriebsmotor eines Kraftfahrzeugs bildet, verwendet werden. Die erfindungsgemäße Sickendichtung kann aber auch zur Abdichtung von Fluidverbindungen, beispielsweise zur Abdichtung einer Fuge zwischen zwei miteinander verbundenen Rohr- oder Leitungsstücken, verwendet werden.

Aus der WO 01/94791 A1 ist eine Pumpe in Form eines Pumpeneinsatzes, der in einem Aufnahmeschacht einer Aufnahmeeinrichtung angeordnet ist, bekannt. Der Pumpeneinsatz ist axial zwischen einem Boden des Aufnahmeschachts und einem Deckel der Aufnahmeeinrichtung angeordnet. Im Betrieb der Pumpe wird Fluid aus einem über den äußeren Umfang der Pumpe erstreckten Saugraum angesaugt und über eine Stirnwand der Pumpe und den Schachtboden abgefördert. Ein ringförmiges Dichtelement, das den Pumpeneinsatz umgibt und als Radialdichtung wirkt, trennt den Pumpenauslass vom Saugraum. Zwischen dem Boden des Aufnahmeschachts und dem Pumpeneinsatz ist eine Federeinrichtung angeordnet, die den Pumpeneinsatz axial gegen den Deckel spannt. Der Pumpeneinsatz ist in einem geringen Ausmaß relativ zur Aufnahmeeinrichtung gegen die Kraft der Federeinrichtung axial beweglich, so dass Bautoleranzen und Geometrieänderungen ausgeglichen werden können. Die Pumpe weist zwei Arbeitsfluten auf, die in einem gemeinsamen Druckraum fördern, also nicht voneinander getrennt sind. Die Pumpe ist somit als mehrflutige Einkreispumpe ausgeführt.

Die EP 3 081 741 A2 offenbart eine Getriebepumpe mit mehreren Arbeitsfluten. Die Pumpe ist als Mehrkreispumpe ausgeführt und weist dementsprechend separate, gegeneinander abgedichtete Druckauslässe, jeweils wenigstens einen Druckauslass pro Flut, auf. Ein erster Druckauslass wird mittels einer ringförmigen Radialdichtung, die ein Gehäuse der Pumpe umgibt, abgedichtet. Innerhalb des mittels der Radialdichtung erhaltenen Druckraums ist eine ringförmige Auslassdichtung angeordnet, die einen zweiten Druckauslass dichtend umgibt, um den zweiten Druckauslass vom ersten Druckraum zu separieren. Die Pumpe ist in Cartridge-Bauweise ausgeführt und wird mit einer äußeren Stirnseite des Pumpengehäuses voran in einen Aufnahmeschacht einer Aufnahmeeinrichtung eingebaut. Ein von der Pumpe gefördertes Druckfluid wird über die Druckauslässe und diesen axial gegenüberliegende Druckanschlüsse der Aufnahmeeinrichtung abgefördert. Eine Federeinrichtung ist an einem Boden des Aufnahmeschachts abgestützt und drückt mit Federkraft gegen die axial zugewandt gegenüberliegende äußere Stirnseite des Pumpengehäuses, wodurch Toleranzen und Geometrieänderungen in axialer Richtung ausgeglichen werden können.

Die US 2017/0260979 A1 offenbart eine Dichtungsanordnung für eine Flügelzellenpumpe in Cartridge-Bauweise, wobei die Flügelzellenpumpe zwei Arbeitsfluten aufweist und als Zweikreispumpe ausgeführt ist. Die Dichtungsanordnung umfasst eine um den Umfang des Pumpengehäuses umlaufend angeordnete Radialdichtung, die einen ersten Druckraum der Pumpe vom Saugraum trennt, und eine Auslassdichtung, die an einer äußeren Stirnseite des Pumpeneinsatzes angeordnet ist. Die Auslassdichtung trennt den ersten Druckraum von einem zweiten Druckraum der Pumpe und dichtet einen Wellendurchtritt für eine Antriebswelle der Pumpe ab.

Der Stand der Technik verwendet Weichstoffdichtungen. Werden die Dichtungen als Axialdichtungen eingesetzt, ist es schwierig, die auf Materialelastizität beruhende Dichtwirkung zu gewährleisten. Die axiale Weite der axialen Fuge, die mittels der Axialdichtung abgedichtet wird, kann sich ändern, beispielsweise aufgrund thermisch bedingter Änderungen der Geometrie und/oder druckbedingter Bewegungen des Pumpengehäuses oder von Gehäuseteilen. Die Fugenweite kann auch von Einbaufall zu Einbaufall aufgrund von Bauteil- und/oder Einbautoleranzen variieren. Weichstoffdichtungen benötigen hohe und über ihren Umfang gleichmäßige Flächenpressungen, um die erforderliche Abdichtung zu erzielen. Ändert sich die Flächenpressung während des Pumpenbetriebs aufgrund von Temperatur- und/oder Druckänderungen oder von Pumpe zu Pumpe aufgrund variierender Toleranzen, kann eine gleichbleibend sichere Dichtwirkung nur mit hohem Aufwand gewährleistet werden. Auch die Standfestigkeit ist ein Problem. Bei Pulsationen, hohen Drücken und großen zu überbrückenden Fugenweiten besteht eine erhöhte Spaltextrusionsgefahr.

Zum Abdichten bei hohen Temperaturen und periodischem Druckwechsel, beispielsweise zum Abdichten von Zylinderköpfen, haben sich Metallsickendichtungen bewährt. Die DE 42 19 709 A1 offenbart hierfür Beispiele.

Es ist eine Aufgabe der Erfindung, eine kostengünstige Dichtung für axialen Dichtkontakt zu schaffen, die Bauteil- und/oder Einbautoleranzen und/oder thermisch bedingte Geometrieänderungen und/oder druckbedingte Bewegungen von Bauteilen am Einbauort der Dichtung unter Aufrechterhaltung der erforderlichen Dichtwirkung wirksam und zuverlässig (langlebig) kompensieren kann.

Eine weitere Aufgabe ist die Bereitstellung einer Pumpe, die für die Anordnung in einem Aufnahmeschacht einer Aufnahmeeinrichtung geeignet ist und für diesen Zweck eine Gehäusestirnwand mit einem oder mehreren Druckauslässen zur Abförderung eines Druckfluids aus einer Förderkammer der Pumpe aufweist. Für eine derartige Pumpe soll die Abdichtung des einen oder der mehreren Druckauslässe in Bezug auf Bauteil- und/oder Einbautoleranzen der Aufnahmeeinrichtung und der Pumpe und/oder thermisch bedingter Geometrieänderungen und/oder druckbedingter Bewegungen von Gehäusestrukturen der Pumpe kostengünstig verbessert werden.

Noch eine weitere Aufgabe ist die Bereitstellung einer Pumpe, beispielsweise einer Vakuumpumpe, mit verbesserter Gehäuseabdichtung.

Die Erfindung schlägt zur Lösung der Aufgabe eine Sickendichtung vor. Die Sickendichtung umfasst eine erste Sickenschleife, die in einer axialen Sicht auf die Sickendichtung einen ersten Innenbereich der Sickendichtung umgibt und eine Sickenstirnfläche für axialen Dichtkontakt mit einem der Bauteile aufweist. Dabei umgibt die erste Sickenschleife und somit deren Sickenstirnfläche einen im ersten Innenbereich gelegenen Durchgang für Fluid. Die erste Sickenschleife bildet in Bezug auf den Durchgang eine kleinste, den Durchgang umgebende Sickenschleife. Dies bedeutet, dass der betreffende Durchgang von keiner kleineren Sickenschleife umgeben wird. Vorzugsweise umgibt die erste Sickenschleife in der axialen Sicht auch keine andere Sicke, insbesondere Sickenschleife, und/oder keine andere Dichtungsstruktur. Die axiale Richtung ist im eingebauten Zustand der Sickendichtung die Hauptströmungsrichtung des Fluids durch den Durchgang.

Die erste Sickenschleife ist vorzugsweise eine Halbsicke, kann alternativ aber auch eine Vollsicke sein.

Die Sickenstirnfläche kann in der axialen Sicht über 360° vollständig um den ersten Innenbereich umlaufen und den Durchgang vorteilhafterweise lückenlos bzw. unterbrechungsfrei umgeben. In derartigen Ausgestaltungen wird der erste Innenbereich und damit der Durchgang im Dichtkontakt, d. h. im eingebauten Zustand, von der radial äußeren Umgebung der Sickenschleife fluidisch getrennt. Grundsätzlich soll jedoch nicht ausgeschlossen werden, dass die erste Sickenschleife einen Fluss in radialer Richtung aus dem ersten Innenbereich nach außen oder von außen in den ersten Innenbereich zulässt, indem sie über ihren Umfang lokal an einer oder gegebenenfalls auch an mehreren Stellen unterbrochen ist.

Wegen der linienförmigen Pressung der Sickenschleife kann eine kritische Mindestflächenpressung besser als bei Verwendung von Weichstoffdichtungen auch dann eingehalten werden, wenn sich die Fugenweite vergleichsweise stark ändert. Die erfindungsgemäße Sickendichtung soll Variationen der Fugenweite von mehr als 0,1 mm, in manchen Verwendungen von 0,2 mm oder noch mehr ausgleichen können.

Nach der Erfindung weist die Sickendichtung eine erste Versteifungsstruktur auf, die sich in der axialen Sicht von der ersten Sickenschleife in den ersten Innenbereich erstreckt und die erste Sickenschleife dadurch versteift. Die erste Versteifungsstruktur erschwert die elastische Verformung der Sickendichtung im ersten Innenbereich, wenn sich die axiale Weite der Fuge aufgrund veränderter Betriebsbedingungen oder von Einbaufall zu Einbaufall toleranzbedingt verkleinert. Durch die Versteifung im ersten Innenbereich wird die Kraft-Weg-Charakteristik der Sickendichtung verbessert, so dass die erfindungsgemäße Sickendichtung größere Variationen der axialen Weite der abzudichtenden Fuge ausgleichen kann. Im Vergleich zu einer herkömmlich gestalteten Sickendichtung ohne Versteifungsstruktur (Vergleichsdichtung) wird die Flächen- bzw. Linienpressung im Dichtkontakt erhöht. Die erfindungsgemäße Sickendichtung setzt einer Verringerung der Fugenweite im zu erwartenden Variationsbereich der Fugenweite eine rückstellende Federkraft entgegen, die größer als die der Vergleichsdichtung ist. Sie kann vorteilhafterweise mit einer höheren axialen Vorspannkraft als die Vergleichsdichtung eingebaut werden.

Insbesondere bei einer als Halbsicke ausgebildeten Sickenschleife kann die Versteifungsstruktur eine Klapp- oder Kippneigung der Sickenschleife reduzieren, wodurch ein Dichtkontakt zuverlässiger gewährleistet werden kann. Die erste Versteifungsstruktur und die erste Sickenschleife sind vorteilhaft fest, insbesondere zerstörungsfrei nicht voneinander trennbar, miteinander verbunden und besonders vorteilhaft einteilig ausgebildet. Unter "einteilig" wird eine Formung in einem Stück verstanden, insbesondere eine Ausbildung homogen aus demselben Material. Bevorzugt sind die erste Versteifungsstruktur und die erste Sickenschleife aus einem einzigen Rohling geformt, vorteilhafterweise durch Umformung des Rohlings.

Die Sickendichtung weist in einfachen Ausgestaltungen nur die erste Sickenschleife und dementsprechend nur den ersten Innenbereich auf. In einer Weiterentwicklung umfasst die Sickendichtung eine weitere, zweite Sickenschleife, die in der axialen Sicht einen neben dem ersten Innenbereich gelegenen zweiten Innenbereich umgibt und eine Sickenstirnfläche für axialen Kontakt mit einem der Bauteile aufweist. Im zweiten Innenbereich ist ebenfalls ein Durchgang für Fluid gelegen. Die zweite Sickenschleife kann ebenfalls eine kleinste, den Durchgang des zweiten Innenbereichs umgebende Sickenschleife sein. Die Sickendichtung kann in Bezug auf die zweite Sickenschleife herkömmlich ausgeführt sein oder, wie in bevorzugten Ausgestaltungen, eine zweite Versteifungsstruktur umfassen, die sich von der zweiten Sickenschleife in den zweiten Innenbereich erstreckt, um die zweite Sickenschleife zu versteifen. In Bezug auf die Versteifung der zweiten Sickenschleife gelten die zur Versteifung der ersten Sickenschleife gemachten Ausführungen in gleicher Weise.

Die zweite Sickenschleife kann eine Vollsicke oder alternativ ebenfalls eine Halbsicke sein.

Die Sickendichtung kann zwei oder mehr Sickenschleifen in axial gestapelter Anordnung umfassen, um die Feder- und Dichteigenschaften der Sickendichtung in Bezug auf Variationen der axialen Weite der Fuge zu verbessern. Die Sickendichtung kann insbesondere eine dritte Sickenschleife umfassen, die in der axialen Sicht einen dritten Innenbereich mit einem Durchgang für das Fluid umgibt und eine Sickenstirnfläche für axialen Dichtkontakt mit dem anderen der Bauteile oder noch einer weiteren Sickenschleife aufweist. Die erste Sickenschleife und die dritte Sickenschleife sind relativ zueinander derart vorgesehen, dass der erste Innenbereich und der dritte Innenbereich in der axialen Sicht überlappen und die Sickenstirnfläche der ersten Sickenschleife von der Sickenstirnfläche der dritten Sickenschleife axial abgewandt ist und einen axialen Abstand, vorzugsweise einen lichten axialen Abstand, aufweist.

Die dritte Sickenschleife ist vorzugsweise eine Halbsicke, kann stattdessen aber auch eine Vollsicke sein. In vorteilhaften Ausführungen sind die erste Sickenschleife und die dritte Sickenschleife diesbezüglich von der gleichen Art.

Im eingebauten Zustand, d. h. im Dichtkontakt, der Sickendichtung ist/sind der Durchgang im ersten Innenbereich und/oder der Durchgang im dritten Innenbereich vorzugsweise durch die erste Sickenschleife und/oder die dritte Sickenschleife von dem Durchgang im zweiten Innenbereich abgedichtet. Im eingebauten Zustand bzw. im Dichtkontakt der Sickendichtung sind der Durchgang des ersten Innenbereichs und der Durchgang des dritten Innenbereichs vorteilhaft fluidkommunizierend miteinander verbunden.

Im Hinblick auf die zu überbrückenden Einbautoleranzen und die betriebsbedingten Geometrieänderungen in der abzudichtenden axialen Fuge kann die Sickendichtung in Ausgestaltungen mit erster Sickenschleife und dritter Sickenschleife insbesondere mehrlagig ausgeführt sein. Sie umfasst in mehrlagiger Ausgestaltung eine erste Dichtungslage, welche die erste Sickenschleife, den ersten Innenbereich und die erste Versteifungsstruktur aufweist, und eine zweite Dichtungslage mit der dritten Sickenschleife und dem dritten Innenbereich. Die Dichtungslagen liegen axial übereinander. Zwischen der ersten Dichtungslage und der zweiten Dichtungslage kann eine oder können gegebenenfalls auch mehrere Zwischenlagen angeordnet sein. In bevorzugten Ausgestaltungen liegen die erste Dichtungslage und die zweite Dichtungslage jedoch unmittelbar aufeinander. Die erste Dichtungslage bildet die erste Sickenschleife und die erste Versteifungsstruktur vorzugsweise einteilig aus.

Die Sickendichtung kann in Bezug auf die dritte Sickenschleife herkömmlich ausgeführt sein, so dass der dritte Innenbereich freibleibt. In bevorzugten Ausgestaltungen umfasst sie jedoch eine dritte Versteifungsstruktur, die sich von der dritten Sickenschleife in den dritten Innenbereich erstreckt und auf diese Weise die dritte Sickenschleife versteift. Die zweite Dichtungslage kann vorteilhafterweise die dritte Versteifungsstruktur bilden. Die zweite Dichtungslage bildet die dritte Sickenschleife und die dritte Versteifungsstruktur vorzugsweise einteilig aus. Die zur ersten Versteifungsstruktur gemachten Ausführungen gelten in vorteilhaften Ausführungen auch für die dritte Versteifungsstruktur.

Die erste Dichtungslage kann die zweite Sickenschleife in axialer Sicht neben der ersten Sickenschleife, vorzugsweise in einem Abstand und somit separat von der ersten Sickenschleife, aufweisen.

Die Sickendichtung kann eine vierte Sickenschleife und optional auch noch weitere Sickenschleifen aufweisen. Die Sickendichtung kann in Ausgestaltungen mit zweiter Sickenschleife und vierter Sickenschleife insbesondere mehrlagig ausgeführt sein. Die Sickendichtung kann eine Dichtungslage mit der zweiten Sickenschleife und eine weitere Dichtungslage mit der vierten Sickenschleife aufweisen. Die Dichtungslage mit der zweiten Sickenschleife kann insbesondere die erste Dichtungslage sein. Die Dichtungslage mit der vierten Sickenschleife kann insbesondere die zweite Dichtungslage sein. Die vierte Sickenschleife kann in der axialen Sicht einen vierten Innenbereich mit einem Durchgang für das Fluid umgeben und eine Sickenstirnfläche für Dichtkontakt mit einem der Bauteile oder noch einer weiteren Sickenschleife aufweisen. Die zweite Sickenschleife und die vierte Sickenschleife können relativ zueinander derart vorgesehen sein, dass der zweite Innenbereich und der vierte Innenbereich einander in der axialen Sicht überlappen. Die zweite Sickenschleife und die vierte Sickenschleife können vorteilhafterweise axial voneinander abgewandt sein und einen axialen Abstand, vorzugsweise einen lichten axialen Abstand, aufweisen.

Die vierte Sickenschleife kann eine Vollsicke oder eine Halbsicke sein. In vorteilhaften Ausführungen sind die zweite Sickenschleife und die vierte Sickenschleife diesbezüglich von der gleichen Art.

Wenn von einer ersten Sickenschleife, einem ersten Innenbereich und einer ersten Versteifungsstruktur die Rede ist, bedeutet dies nicht, dass die Sickendichtung eine weitere Sickenschleife mit einem weiteren Innenbereich mit oder ohne weitere Versteifungsstruktur aufweisen muss. Ebenso setzt die Bezeichnung "dritte Sickenschleife" nicht voraus, dass eine zweite Sickenschleife vorhanden ist. Die erfindungsgemäße Sickendichtung kann daher in ersten Ausgestaltungen nur eine einzige Sickenschleife, nämlich die erste Sickenschleife, aufweisen. In zweiten Ausgestaltungen kann sie nur zwei Sickenschleifen aufweisen, nämlich die erste Sickenschleife und entweder zusätzlich nur die zweite Sickenschleife oder zusätzlich nur die dritte Sickenschleife. In dritten Ausgestaltungen weist sie die erste Sickenschleife, die zweite Sickenschleife und die dritte Sickenschleife auf. Sie kann darüber hinaus weitere Sickenschleifen aufweisen, wie etwa die genannte vierte Sickenschleife. Die jeweilige Sickenschleife kann in vergleichbarer Weise wie die erste Sickenschleife nach radial innen versteift oder stattdessen herkömmlich ausgeführt sein.

Die erste Sickenschleife und jede optional weitere Sickenschleife weist jeweils eine Sickenstirnfläche für axialen Kontakt mit einem Steg des jeweiligen Bauteils oder einer optionalen Dichtungslage der Sickendichtung auf. Wenn es im Rahmen der Erfindung heißt, dass sich die jeweilige Versteifungsstruktur in der axialen Sicht von der jeweiligen Sickenschleife in deren Innenbereich erstreckt, so bedeutet dies, dass die betreffende Versteifungsstruktur im eingebauten Zustand der Sickendichtung über den Steg des jeweiligen Bauteils nach radial innen vorragt. Die Versteifungsstruktur behindert somit die Strömung des Fluids in axialer Richtung, sie bildet einen Strömungswiderstand.

In Verwendungen, in denen die Sickendichtung der Abdichtung eines Auslasses einer Schmierölpumpe dient, kann die jeweilige Versteifungsstruktur mit Vorteil als Drossel wirken. Die Drosselwirkung der jeweiligen Versteifungsstruktur kann in einem kalten Ausgangszustand der Pumpe von Vorteil sein, um Druckspitzen abzubauen, die von einer im kalten Zustand erhöhten Viskosität des Fluids herrühren. Derartige Druckspitzen können beispielsweise einen stromab der Pumpe angeordneten Filter schädigen.

Die Pumpe kann vorteilhafterweise als Flügelzellenpumpe ausgeführt sein. Die Unterflügelbereiche der Flügel können mit der Hochdruckseite der Pumpe verbunden sein, um die Flügel an ihren Unterseiten mit dem Fluid der Hochdruckseite beaufschlagen zu können. Bei Flügelzellenpumpen mit Unterflügeldruckversorgung kann/können die erste Versteifungsstruktur und die dritte Versteifungsstruktur, falls vorhanden, als Kaltstartunterstützer genutzt werden. Zusätzlich oder stattdessen kann/können die zweite Versteifungsstruktur, falls vorhanden, und/oder eine vierte Versteifungsstruktur, falls vorhanden, als Kaltstartunterstützer genutzt werden. Insbesondere im kalten Ausgangszustand, beispielsweise beim Kaltstart einer Pumpe, erschwert die jeweilige Versteifungsstruktur mit ihrer Drosselwirkung das Abströmen des geförderten Fluids, insbesondere Öl, aus der Pumpe. Die Unterflügelbereiche sind vorzugsweise stromauf der Sickendichtung an die Hochdruckseite der Pumpe angeschlossen. In derartigen Ausführungen bewirkt die jeweilige Versteifungsstruktur aufgrund der im kalten Zustand erhöhten Zähigkeit des Fluids eine verstärkte Drosselwirkung und dadurch bei einem Kaltstart der Pumpe eine besonders rasche Druckversorgung der Unterflügelbereiche, so dass das Fluid beim Kaltstart die Flügel schon bei niedriger Drehzahl des Rotors nach außen gegen eine den Rotor umgebende Hubkontur drückt. Die jeweilige Versteifungsstruktur kann so gestaltet sein, dass das geförderte Fluid im kalten Zustand vorrangig der Unterflügeldruckversorgung zur Verfügung steht und damit die Unterflügelbereiche vorrangig mit dem Fluid versorgt werden, um die Flügel nach außen gegen die Hubkontur zu drücken.

Zusätzlich oder in anderen Verwendungen kann die jeweilige Versteifungsstruktur beispielsweise als Filter oder Sieb genutzt werden. Ferner ist es denkbar, dass die jeweilige Versteifungsstruktur zur Vergleichmäßigung der Fluidströmung genutzt wird.

Die jeweilige Versteifungsstruktur kann von der Sickenschleife, zu deren Versteifung sie vorgesehen ist, ein Stück weit in den Innenbereich ragen. Sie kann die Sickenschleife beispielsweise ein kleines Stück weit nach radial innen verlängern, so dass die jeweilige Sickenschleife beispielsweise über den Bauteilsteg, an den sie angelegt werden soll, umlaufend ein kleines Stück nach innen ringförmig vorragt.

In bevorzugten Ausgestaltungen durchquert die jeweilige Versteifungsstruktur den Innenbereich der Sickenschleife, zu deren Versteifung sie vorgesehen ist. In vorteilhaften Ausgestaltungen durchquert die Versteifungsstruktur den zentralen Bereich des jeweiligen Innenbereichs. Die Versteifungsstruktur, d. h. die erste Versteifungsstruktur und/oder die optionale zweite Versteifungsstruktur und/oder die optionale dritte Versteifungsstruktur, kann in der axialen Sicht beispielsweise ein Verbindungssteg sein, der den jeweiligen Innenbereich durchquert. In Weiterbildungen kann die jeweilige Versteifungsstruktur mehrere Verbindungsstege umfassen. Die mehreren Verbindungsstege können in der axialen Sicht beispielsweise sternförmig angeordnet sein. In weiteren Ausgestaltungen ist die jeweilige Versteifungsstruktur gitterförmig, netzförmig oder siebförmig. Die jeweilige Versteifungsstruktur kann grundsätzlich zusätzlich oder alternativ zur Drosselfunktion auch eine Filterfunktion erfüllen und einen Filter ausbilden oder durch einen Filter gebildet sein.

Die jeweilige Versteifungsstruktur kann scheibenförmig, d. h. plan, oder schalenförmig, d. h. gewölbt, sein.

Grundsätzlich genügt es, wenn im Innenbereich der jeweiligen Sickenschleife ein einziger zusammenhängender Durchgang für das Fluid vorgesehen ist. In bevorzugten Ausgestaltungen sind im jeweiligen Innenbereich jedoch mehrere, voneinander getrennte Durchgänge angeordnet, die gemeinsam einen durchströmbaren Querschnitt der jeweiligen Sickenschleife bzw. des jeweiligen Innenbereichs bilden. So kann die jeweilige Versteifungsstruktur beispielsweise mehr als 30 % oder, bevorzugter, den überwiegenden Teil des von der jeweiligen Sickenschleife umgebenen Innenbereichs ausfüllen und mit dem einen oder den bevorzugt mehreren Durchgängen der jeweiligen Sickenschleife versehen sein. Die erste Versteifungsstruktur und/oder die optionale zweite Versteifungsstruktur und/oder die optionale dritte Versteifungsstruktur und/oder die optionale vierte Versteifungsstruktur kann oder können insbesondere mehrfach perforiert sein, in der axialen Sicht also nebeneinander eine Mehrzahl von Durchgängen für das Fluid aufweisen, die gemeinsam den von der jeweiligen Sickenschleife umgebenen, durchströmbaren Querschnitt, d. h. den von der jeweiligen Sickenschleife umgebenen Strömungsquerschnitt, bilden. Die in der axialen Sicht gemessene Querschnittsfläche des von der jeweiligen Sickenschleife umgebenen Innenbereichs ist vorteilhafterweise wenigstens fünfmal oder wenigstens zehnmal größer als der jeweilige einzelne Durchgang der mehreren Durchgänge. Die Durchgänge können insbesondere runde, beispielsweise kreisrunde, Durchgangslöcher sein.

Die Sickendichtung kann insbesondere eine Metallsickendichtung sein, wodurch, im Vergleich zu einer Elastomer- oder Elastomerverbunddichtung, eine kostengünstige, die technische Sauberkeit fördernde (kein Abtrag von Elastomerpartikel) und zuverlässige/langlebige (da keine Spaltextrusion) Dichtung bereitgestellt werden kann. Die Dichtungslage(n) ist/sind vorzugsweise Blechstrukturen.

Die Sickendichtung kann zur Verbesserung der Mikrodichtwirkung (Rauigkeit der Gegenfläche des jeweiligen Bauteils) mit einem nachgiebigen Dichtungsmaterial, beispielsweise einem Elastomer oder thermoplastischen Elastomer (TPE), beschichtet oder belegt sein. In derartigen Ausführungen ist/sind zumindest die erste Sickenschleife und/oder zumindest die zweite Sickenschleife, falls vorhanden, und/oder zumindest die dritte Sickenschleife, falls vorhanden, und/oder zumindest die vierte Sickenschleife, falls vorhanden, zumindest an ihrer oder ihren Sickenstirnfläche(n) mit dem nachgiebigen Dichtungsmaterial beschichtet oder belegt. Eine reine Sickensichtung nur aus Metall, nicht beschichtet, wird der Sauberkeit und auch der Kosten wegen bevorzugt.

Die Erfindung betrifft eine Sickendichtung nicht nur als solche, sondern auch in bevorzugten Verwendungen, in denen sie der Abdichtung eines Pumpengehäuses oder, noch bevorzugter, der Abdichtung eines Pumpenauslasses dient. Des Weiteren betrifft die Erfindung eine Pumpe zur Beaufschlagung oder Versorgung eines Aggregats mit einem Druckfluid oder zur Erzeugung eines Unterdrucks. Hierbei kann es sich beispielsweise um eine Getriebepumpe zur Versorgung eines Getriebes mit hydraulischem Fluid, eine Schmier- und/oder Kühlmittelpumpe zur Versorgung eines Antriebsmotors, wie etwa eines Verbrennungsmotors oder Elektromotors, mit Schmier- und/oder Kühlmittel, beispielsweise mit Schmieröl, oder um eine Vakuumpumpe zur Beaufschlagung eines Aggregats, insbesondere eines Bremskraftverstärkers, mit Unterdruck handeln.

Die Pumpe umfasst ein Pumpengehäuse mit einer Umfangswand, einer ersten Stirnwand und einer zweiten Stirnwand. Die Umfangswand umgibt eine Förderkammer der Pumpe, und die Stirnwände begrenzen die Förderkammer an ihren Stirnseiten. Die Pumpe umfasst ferner ein Förderglied, das in der Förderkammer beweglich ist, um das Fluid von einer Niederdruckseite der Pumpe zu einer Hochdruckseite der Pumpe und dort durch einen Auslass der Pumpe zu fördern. Nach der Erfindung weist die Pumpe eine Sickendichtung mit wenigstens der ersten Sickenschleife auf. Die erste Sickenschleife umgibt in der axialen Sicht den Auslass oder die Förderkammer und ist zur Abdichtung einer Stirnseite eines Dichtstegs des Pumpengehäuses axial zugewandt. Im eingebauten Zustand der Pumpe ist die erste Sickenschleife in einem stirnseitigen axialen Dichtkontakt mit dem Dichtsteg des Pumpengehäuses. Vor dem Einbau kann die erste Sickenschleife bereits in einem Kontakt mit der Stirnseite des Dichtstegs des Pumpengehäuses sein oder von dieser Stirnseite noch einen geringen axialen Abstand haben.

Die Sickendichtung kann die erste Versteifungsstruktur aufweisen. In einer ersten Verwendung dient die Sickendichtung als Auslassdichtung und umgibt dementsprechend den Auslass oder einen von mehreren Auslässen der Pumpe. In einer zweiten Verwendung, in der sie als Gehäusedichtung dient, umgibt sie die Förderkammer.

Weist die Sickendichtung die erste Sickenschleife und die erste Versteifungsstruktur auf, überlappt die erste Versteifungsstruktur in der Verwendung als Auslassdichtung in der axialen Sicht mit dem Auslass, ragt also in den freien Strömungsquerschnitt des Auslasses. In der Verwendung als Gehäusedichtung überlappt die Versteifungsstruktur in der axialen Sicht mit der Förderkammer, ragt also in der axialen Sicht nach radial innen in die Förderkammer. Die Pumpe ist vorzugsweise als eine Flügelzellenpumpe ausgebildet. Grundsätzlich kann die Pumpe aber auch als Außenzahnradpumpe, Innenzahnradpumpe, Pendelschieberpumpe, Kolbenpumpe oder dergleichen ausgebildet sein.

Dient die Sickendichtung als Auslassdichtung, eignet sich die Pumpe nicht zuletzt wegen der erfindungsgemäßen Sickendichtung in besonderer Weise für Verwendungen, in denen das Pumpengehäuse zumindest teilweise in einen Aufnahmeschacht einer Aufnahmeeinrichtung hineinragt, wie dies beispielsweise bei Getriebepumpen üblich ist. In derartigen Verwendungen ragt die Pumpe mit der Sickendichtung axial voran in den Aufnahmeschacht, so dass die Sickendichtung den Pumpenauslass zum Boden des Aufnahmeschachts hin abdichtet. Die axiale Fuge wird zwischen der äußeren Stirnseite des Pumpengehäuses, an der die Sickendichtung angeordnet ist, und dem axial gegenüberliegenden Schachtboden gebildet.

Die Sickendichtung kann in einem Kraftnebenschluss angeordnet sein, bevorzugt im Kraftnebenschluss zu einer Federeinrichtung, die im Vergleich zur Sickendichtung einen größeren Teil der über die axiale Fuge wirkenden Axialkräfte aufnimmt. Die Sickendichtung muss in derartigen Ausgestaltungen nur die im axialen Dichtkontakt für die sichere Abdichtung erforderlichen Axialkräfte aufnehmen und kann daher auf ihre eigentliche Aufgabe, die Dichtwirkung, optimiert werden. Die Sickendichtung kann alternativ im Krafthauptschluss angeordnet sein. Sie kann in derartigen Ausführungen die Federeinrichtung bilden, um die Pumpe axial in ihre Befestigung zu spannen.

Die Pumpe kann beispielsweise eine Linearhubpumpe oder, bevorzugter, eine Rotationspumpe sein. Sie kann als Rotationspumpe außenachsig, beispielsweise eine Außenzahnradpumpe, oder innenachsig, beispielsweise eine Flügelzellenpumpe, Innenzahnradpumpe oder Pendelschieberpumpe, sein. Das Förderglied kann einen in der Förderkammer um eine Drehachse drehbeweglichen Rotor umfassen, der dazu dient, das Fluid von einer Niederdruckseite der Pumpe zu einer Hochdruckseite der Pumpe und durch einen Auslass der Pumpe zu fördern. Der Rotor kann vorteilhafterweise zur Bildung von Förderzellen dienen, die sich bei Drehung des Rotors periodisch vergrößern und verkleinern, um das Fluid von der Niederdruckseite der Pumpe zur Hochdruckseite der Pumpe zu fördern.

Auch in den nachstehend formulierten Aspekten werden Merkmale der Erfindung beschrieben. Die Aspekte sind in der Art von Ansprüchen formuliert und können diese ersetzen. In den Aspekten offenbarte Merkmale können die Ansprüche ferner ergänzen und/oder relativieren, Alternativen zu einzelnen Merkmalen aufzeigen und/oder Anspruchsmerkmale erweitern. In Klammern gesetzte Bezugszeichen beziehen sich auf nachfolgend in Figuren illustrierte Ausgestaltungsbeispiele der Erfindung. Sie schränken die in den Aspekten beschriebenen Merkmale nicht unter den Wortsinn als solchen ein, zeigen andererseits jedoch bevorzugte Möglichkeiten der Verwirklichung des jeweiligen Merkmals auf.
Aspekt 1. Sickendichtung zum Abdichten einer axialen Fuge zwischen einem ersten Bauteil (1) und einem zweiten Bauteil (15), die Sickendichtung (S) umfassend:
   (a) eine erste Sickenschleife (21), die in einer axialen Sicht einen ersten Innenbereich (22) umgibt und eine Sickenstirnfläche für axialen Kontakt mit einem der Bauteile (1, 15) aufweist,
   (b) einen im ersten Innenbereich (22) gelegenen Durchgang (23) für Fluid,
   (c) wobei die erste Sickenschleife (21) eine kleinste, den Durchgang (23) umgebende Sickenschleife ist, und
   (d) eine erste Versteifungsstruktur (24), die sich in der axialen Sicht von der ersten Sickenschleife (21) in den ersten Innenbereich (22) erstreckt, um die erste Sickenschleife (21) zu versteifen.
Aspekt 2. Sickendichtung nach dem vorhergehenden Aspekt, umfassend:
   - eine zweite Sickenschleife (25), die in der axialen Sicht einen neben dem ersten Innenbereich (22) gelegenen zweiten Innenbereich (26) umgibt und eine Sickenstirnfläche für axialen Kontakt mit einem der Bauteile (1, 15) aufweist, und
   - einen im zweiten Innenbereich (26) gelegenen Durchgang (27) für Fluid.
Aspekt 3. Sickendichtung nach dem vorhergehenden Aspekt, umfassend eine zweite Versteifungsstruktur (28), die sich von der zweiten Sickenschleife (25) in den zweiten Innenbereich (26) erstreckt, um die zweite Sickenschleife (25) zu versteifen.
Aspekt 4. Sickendichtung nach einem der zwei unmittelbar vorhergehenden Aspekte, wobei die zweite Sickenschleife (25) eine Vollsicke oder stattdessen eine Halbsicke ist.
Aspekt 5. Sickendichtung nach einem der drei unmittelbar vorhergehenden Aspekte, wobei die zweite Sickenschleife (25) eine kleinste, den Durchgang (27) des zweiten Innenbereichs (26) umgebende Sickenschleife ist.
Aspekt 6. Sickendichtung nach einem der vier unmittelbar vorhergehenden Aspekte, wobei die zweite Sickenschleife (25) und die zweite Versteifungsstruktur (28) einheitlich aus einem einzigen Rohling, vorzugsweise einem Blech, insbesondere Stahlblech, geformt sind.
Aspekt 7. Sickendichtung nach einem der vorhergehenden Aspekte, wobei die erste Sickenschleife (21) und die erste Versteifungsstruktur (24) einheitlich aus einem einzigen Rohling, vorzugsweise einem Blech, insbesondere Stahlblech, geformt sind.
Aspekt 8. Sickendichtung nach einem der vorhergehenden Aspekte in Kombination mit Aspekt 2, wobei die erste Sickenschleife (21), die zweite Sickenschleife (25), die erste Versteifungsstruktur (24) und die zweite Versteifungsstruktur (28) nach Aspekt 3, falls vorhanden, aus einem einzigen Rohling, vorzugsweise einem Blech, insbesondere Stahlblech, geformt sind.
Aspekt 9. Sickendichtung nach einem der vorhergehenden Aspekte, umfassend eine dritte Sickenschleife (31), die in der axialen Sicht einen dritten Innenbereich (32) mit einem Durchgang (33) für das Fluid umgibt und eine Sickenstirnfläche für axialen Kontakt mit dem anderen der Bauteile (1, 15) aufweist, wobei
   - die erste Sickenschleife (21) und die dritte Sickenschleife (31) axial übereinander, vorzugsweise direkt übereinander, angeordnet sind,
   - der erste Innenbereich (22) und der dritte Innenbereich (32) in der axialen Sicht überlappen und
   - die Sickenstirnfläche der ersten Sickenschleife (21) von der Sickenstirnfläche der dritten Sickenschleife (31) axial abgewandt ist.
Aspekt 10. Sickendichtung nach einem der vorhergehenden Aspekte, umfassend:
   - eine erste Dichtungslage (20), welche die erste Sickenschleife (21), den ersten Innenbereich (22) und die erste Versteifungsstruktur (24) aufweist, und
   - eine zweite Dichtungslage (30) mit einer dritten Sickenschleife (31), die einen dritten Innenbereich (32), in dem ein Durchgang (33) für das Fluid gelegen ist, umgibt,
      wobei
   - die Dichtungslagen (20, 30) axial übereinander, vorzugsweise unmittelbar aufeinander, liegen,
   - die dritte Sickenschleife (31) für einen axialen Kontakt mit dem anderen der Bauteile (1, 15) eine Sickenstirnfläche aufweist, die von der Sickenstirnfläche der ersten Sickenschleife (21) axial abgewandt ist, und
   - der erste Innenbereich (22) und der dritte Innenbereich (32) in der axialen Sicht überlappen.
Aspekt 11. Sickendichtung nach dem vorhergehenden Aspekt in Kombination mit Aspekt 2, wobei die erste Dichtungslage (20) die zweite Sickenschleife (25) und den zweiten Innenbereich (26) aufweist.
Aspekt 12. Sickendichtung nach einem der drei unmittelbar vorhergehenden Aspekte, umfassend eine dritte Versteifungsstruktur (34), die sich von der dritten Sickenschleife (31) in den dritten Innenbereich (32) erstreckt, um die dritte Sickenschleife (31) zu versteifen.
Aspekt 13. Sickendichtung nach einem der vier unmittelbar vorhergehenden Aspekte, wobei sich die erste Sickenschleife (21) und die dritte Sickenschleife (31) in Richtung auf den jeweils umgebenen Innenbereich (22, 32) und die jeweilige Sickenstirnfläche axial voneinander weg spreizen, so dass zwischen diesen Sickenstirnflächen ein verlängerter axialer Federweg erhalten wird.
Aspekt 14. Sickendichtung nach einem der fünf unmittelbar vorhergehenden Aspekte, wobei die dritte Sickenschleife (31) eine kleinste, den Durchgang (33) des dritten Innenbereichs (32) umgebende Sickenschleife ist.
Aspekt 15. Sickendichtung nach einem der vorhergehenden Aspekte, wobei die erste Sickenschleife (21) und/oder die dritte Sickenschleife (31) eine Halbsicke ist/sind.
Aspekt 16. Sickendichtung nach einem der vorhergehenden Aspekte, wobei die jeweilige Versteifungsstruktur (24, 28, 34) den zugeordneten Innenbereich (22, 26, 32) durchquert.
Aspekt 17. Sickendichtung nach einem der vorhergehenden Aspekte, wobei sich die jeweilige Versteifungsstruktur (24, 28, 34) in der axialen Sicht über einen Winkel von mehr als 90° oder mehr als 120° längs der zugeordneten Sickenschleife (21, 25, 31) erstreckt.
Aspekt 18. Sickendichtung nach einem der vorhergehenden Aspekte, wobei sich die jeweilige Versteifungsstruktur (24, 28, 34) in der axialen Sicht vollständig umlaufend längs der zugeordneten Sickenschleife (21, 25, 31) erstreckt.
Aspekt 19. Sickendichtung nach einem der zwei unmittelbar vorhergehenden Aspekte, wobei sich die jeweilige Versteifungsstruktur (24, 28, 34) in der axialen Sicht unterbrechungsfrei längs der zugeordneten Sickenschleife (21, 25, 31) erstreckt.
Aspekt 20. Sickendichtung nach einem der vorhergehenden Aspekte, wobei die jeweilige Versteifungsstruktur (24, 28, 34) scheiben- oder schalenförmig ist.
Aspekt 21. Sickendichtung nach einem der vorhergehenden Aspekte, wobei die jeweilige Versteifungsstruktur (24, 28, 34) in axialer Draufsicht nebeneinander mehrere voneinander getrennte, von der zugeordneten Sickenschleife (21, 25, 31) gemeinsam umgebene Durchgänge (23, 27, 33) aufweist. *(Perforation)*
Aspekt 22. Sickendichtung nach einem der vorhergehenden Aspekte, wobei die jeweilige Versteifungsstruktur (24, 28, 34) in axialer Draufsicht wenigstens 30% oder wenigstens 50% der Fläche des von der zugeordneten Sickenschleife (21, 25, 31) umgebenen Innenbereichs (22, 26, 32) füllt.
Aspekt 23. Sickendichtung nach einem der vorhergehenden Aspekte, wobei die jeweilige Versteifungsstruktur (24, 28, 34) in axialer Draufsicht einen überwiegenden Teil der Querschnittsfläche des zugeordneten Innenbereichs (22, 26, 32) füllt.
Aspekt 24. Sickendichtung nach einem der vorhergehenden Aspekte, wobei sich die jeweilige Versteifungsstruktur (24, 28, 34) über wenigstens den überwiegenden Teil des inneren Umfangs der zugehörigen Sickenschleife (21, 25, 31) mit einer in der axialen Sicht radialen Breite, die wenigstens der radialen Breite der zugehörigen Sickenschleife (21, 25, 31) entspricht, erstreckt.
Aspekt 25. Sickendichtung nach einem der vorhergehenden Aspekte, wobei die jeweilige Versteifungsstruktur (24, 28, 34) sickenfrei ist.
Aspekt 26. Sickendichtung nach einem der vorhergehenden Aspekte, wobei im jeweiligen Innenbereich (22, 26, 32) keine weitere Sickenschleife zum Anlegen an eines der Bauteile (1, 15) verläuft.
Aspekt 27. Sickendichtung nach einem der vorhergehenden Aspekte, wobei die jeweilige Sickenschleife (21, 25, 31) nicht verzweigt.
Aspekt 28. Sickendichtung nach einem der vorhergehenden Aspekte, wobei die Sickendichtung (S) eine reine Metallsickendichtung ist.
Aspekt 29. Sickendichtung nach einem der Aspekte 1 bis 27, wobei die jeweilige Sickenschleife (21, 25, 31) zumindest an ihrer/n Sickenstirnfläche(n) mit einem nachgiebigen Dichtungsmaterial, beispielsweise einem Elastomer oder thermoplastischen Elastomer (TPE), beschichtet oder belegt ist, um die Mikrodichtwirkung der betreffenden Sickenschleife zu verbessern.
Aspekt 30. Pumpe zur Beaufschlagung eines Aggregats, beispielsweise eines Getriebes, mit Fluid, die Pumpe umfassend:
   (a) ein Pumpengehäuse (1) mit einer Umfangswand (2), die eine Förderkammer (5) der Pumpe umgibt, einer ersten Stirnwand (3) und einer zweiten Stirnwand (4), die die Förderkammer (5) an ihren Stirnseiten begrenzen,
   (b) einen Einlass (6) für das Fluid auf einer Niederdruckseite des Pumpengehäuses (1) und einen Auslass (8), durch den Fluid auf einer Hochdruckseite des Pumpengehäuses (1) aus der Förderkammer (5) förderbar ist,
   (c) ein in der Förderkammer (5) bewegliches Förderglied zur Förderung des Fluids von der Niederdruckseite zur Hochdruckseite, und
   (d) eine Sickendichtung (S) mit einer ersten Sickenschleife (21), die in einer axialen Sicht auf die Sickendichtung (S) einen vom Fluid axial durchströmbaren ersten Innenbereich (22) der Sickendichtung (S) umgibt und den Auslass (8) oder die Förderkammer (5) zur Abdichtung in einem stirnseitigen, bezüglich der ersten Sickenschleife (21) axialen Kontakt umgibt.
Aspekt 31. Pumpe nach dem vorhergehenden Aspekt, dadurch gekennzeichnet, dass die erste Sickenschleife (21) nur den Auslass (8) umgibt, um den Auslass (8) von seiner Umgebung fluidisch zu trennen.
Aspekt 32. Pumpe nach einem der zwei unmittelbar vorhergehenden Aspekte, wobei der Auslass (8) an einer von der Förderkammer (5) abgewandten äußeren Stirnseite der ersten Stirnwand (3) mündet und die Sickendichtung (S) am Pumpengehäuse (1) gehalten ist, so dass sie der äußeren Stirnseite der ersten Stirnwand (3) zur Abdichtung des Auslasses (8) axial zugewandt ist, vorzugsweise an der äußeren Stirnseite der ersten Stirnwand (3) im axialen Kontakt anliegt.
Aspekt 33. Pumpe nach einem der drei unmittelbar vorhergehenden Aspekte, wobei
   - die Sickendichtung (S) eine dritte Sickenschleife (31) umfasst, die in der axialen Sicht einen vom Fluid durchströmbaren dritten Innenbereich (32) der Sickendichtung (S) umgibt, wobei
   - der erste Innenbereich (22) und der dritte Innenbereich (32) in der axialen Sicht überlappen und
   - eine den Auslass (8) umgebende äußere Sickenstirnfläche der ersten Sickenschleife (21) dem Pumpengehäuse (1) axial zugewandt und einer äußeren Sickenstirnfläche der dritten Sickenschleife (31) axial abgewandt ist.
Aspekt 34. Pumpe nach dem vorhergehenden Aspekt, wobei die erste Sickenschleife (21) und die dritte Sickenschleife (31) axial elastisch aufeinander zu beweglich sind.
Aspekt 35. Pumpe nach einem der zwei unmittelbar vorhergehenden Aspekte, wobei die erste Sickenschleife (21) und die dritte Sickenschleife (31) Halbsicken sind, die sich zum jeweiligen Innenbereich hin voneinander weg spreizen.
Aspekt 36. Pumpe nach einem der drei unmittelbar vorhergehenden Aspekte, wobei die Pumpe an einer Aufnahmeeinrichtung (15) angeordnet ist, die Aufnahmeeinrichtung (15) eine dem Auslass (8) axial gegenüberliegende Stirnwand (17), vorzugsweise ein Schachtboden (17), mit einem Druckanschluss (18) aufweist und die dritte Sickenschleife (31) den Druckanschluss (18) in axialem Kontakt mit der Stirnwand (17) der Aufnahmeeinrichtung (15) umgibt, so dass der Auslass (8) mit dem Druckanschluss (18) fluiddicht verbunden ist.
Aspekt 37. Pumpe nach dem vorhergehenden Aspekt, wobei die Sickendichtung (S) mit der ersten Sickenschleife (21) an der ersten Stirnwand (3) des Pumpengehäuses (1) und mit der dritten Sickenschleife (31) an der Stirnwand (17) der Aufnahmeeinrichtung (15) jeweils im axialen Kontakt anliegt.
Aspekt 38. Pumpe nach einem der Aspekte 30 bis 37, wobei
   - die Pumpe an einer Aufnahmeeinrichtung (15) angeordnet ist,
   - die Aufnahmeeinrichtung (15) einen Aufnahmeschacht (16) mit einem Schachtboden (17) aufweist,
   - wenigstens ein axialer Abschnitt des Pumpengehäuses (1) im Aufnahmeschacht (16) angeordnet ist, so dass die äußere Stirnseite der ersten Stirnwand (3) dem Schachtboden (17) unter Ausbildung einer axialen Fuge axial gegenüberliegt, und
   - die Sickendichtung (S) den Auslass (8) in der axialen Fuge abdichtet.
Aspekt 39. Pumpe nach einem der Aspekte 30 bis 38, wobei die Pumpe einen an der äußeren Stirnseite der ersten Stirnwand (3) des Pumpengehäuses (1) neben dem Auslass (8) mündenden zweiten Auslass (9) für das Fluid und die Sickendichtung (S) eine zweite Sickenschleife (25) umfasst, die der äußeren Stirnseite der ersten Stirnwand (3) des Pumpengehäuses (1) axial zugewandt ist, vorzugsweise an der äußeren Stirnseite der ersten Stirnwand (3) im axialen Kontakt anliegt, wobei die zweite Sickenschleife (25) in der axialen Sicht einen neben dem ersten Innenbereich (22) gelegenen, vom Fluid axial durchströmbaren zweiten Innenbereich (26) umgibt und den zweiten Auslass (9) in einem stirnseitigen, bezüglich der ersten Sickenschleife (21) axialen Kontakt umgibt.
Aspekt 40. Pumpe nach einem der Aspekte 30 bis 39, wobei die Sickendichtung (S) in einem montierten Ausgangszustand der Pumpe unter einer axialen Vorspannkraft steht, so dass sie elastisch axial eingefedert ist und auf das Pumpengehäuse eine axiale Federkraft entsprechend der Vorspannkraft ausübt.
Aspekt 41. Pumpe nach einem der Aspekte 30 bis 40, wobei die Sickendichtung (S) im montierten Zustand der Pumpe über die erste Sickenschleife (21) entweder in einem Kraftnebenschluss zu einer Federeinrichtung (40) oder in einem Krafthauptschluss eine axiale Federkraft auf das Pumpengehäuse (1) ausübt.
Aspekt 42. Pumpe nach einem der Aspekte 30 bis 41, umfassend eine Federeinrichtung (40), die zur Ausübung einer axial auf das Pumpengehäuse (1) wirkenden Federkraft am Pumpengehäuse (1) angeordnet ist.
Aspekt 43. Pumpe nach einem der Aspekte 30 bis 42, umfassend eine Federeinrichtung (40) zur Ausübung einer axial auf das Pumpengehäuse (1) wirkenden Federkraft, wobei die Sickendichtung (S) in einem Kraftnebenschluss zur Federeinrichtung (40) angeordnet ist.
Aspekt 44. Pumpe nach einem der Aspekte 30 bis 43, wobei die Sickendichtung (S) zur Ausübung einer axial auf das Pumpengehäuse (1) wirkenden Federkraft in einem Krafthauptschluss, vorzugsweise am Pumpengehäuse (1), angeordnet ist.
Aspekt 45. Pumpe nach Aspekt 30, wobei die erste Stirnwand einen Gehäusedeckel bildet und die Sickendichtung zur Abdichtung der Förderkammer zwischen der Umfangswand und der ersten Stirnwand angeordnet ist.
Aspekt 46. Pumpe nach einem der Aspekte 30 bis 45, wobei das Förderglied (10) ein um eine Drehachse (R) drehbeweglicher Rotor (10) zur Bildung von Förderzellen ist, die sich zur Förderung des Fluids bei Drehung des Rotors (10) periodisch vergrößern und verkleinern, wobei die Axialrichtung der ersten Sickenschleife (21) vorzugsweise parallel zur Drehachse (R) des Förderglieds (10) ist.
Aspekt 47. Pumpe nach einem der Aspekte 30 bis 46, wobei die Pumpe eine Getriebepumpe und/oder eine Schmier- und/oder Kühlmittelpumpe oder eine Vakuumpumpe für ein Kraftfahrzeug oder eine Getriebepumpe für eine Vorrichtung zur Erzeugung von Energie, beispielsweise eine Windkraftturbine, ist.
Aspekt 48. Pumpe nach einem der Aspekte 30 bis 47, wobei die Pumpe mehrflutig ist und einen ersten Auslass (8) und einen zweiten Auslass (9) aufweist, wobei der erste Auslass (8) an einer äußeren Stirnseite der ersten Stirnwand (3) des Pumpengehäuses (1) mündet.
Aspekt 49. Pumpe nach dem vorhergehenden Aspekt, wobei der zweite Auslass (9) an der äußeren Stirnseite der ersten Stirnwand (3) neben dem ersten Auslass (8) mündet.
Aspekt 50. Pumpe nach einem der zwei unmittelbar vorhergehenden Aspekte, wobei die Sickendichtung (S) den ersten Auslass (8) vom zweiten Auslass (9) trennt und die Pumpe mehrkreisig ist.
Aspekt 51. Pumpe nach einem der Aspekte 30 bis 50, dadurch gekennzeichnet, dass die Sickendichtung (S) eine Sickendichtung (S) nach einem der Aspekte 1 bis 28 ist, wobei die erste Versteifungsstruktur (24) in der axialen Sicht bei Abdichtung des Auslasses (8) mit dem Auslass (8) und bei Abdichtung der Förderkammer (5) mit der Förderkammer (5) überlappt, so dass die erste Versteifungsstruktur (24) im Betrieb der Pumpe vom Fluid angeströmt wird.
Aspekt 52. Pumpe nach dem vorhergehenden Aspekt in Kombination mit Aspekt 9 oder 10, wobei auch die dritte Versteifungsstruktur (34) in der axialen Sicht bei Abdichtung des Auslasses (8) mit dem Auslass (8) und bei Abdichtung der Förderkammer (5) mit der Förderkammer (5) überlappt, so dass die erste Versteifungsstruktur (24) und die dritte Versteifungsstruktur (34) im Betrieb der Pumpe nacheinander vom Fluid angeströmt werden.

Nachfolgend wird ein Ausgestaltungsbeispiel der Erfindung anhand von Figuren erläutert. Am Ausgestaltungsbeispiel offenbar werdende Merkmale bilden jeweils einzeln und in jeder Merkmalskombination die Gegenstände der Ansprüche, die Aspekte und die vorstehend darüber hinaus beschriebenen Ausgestaltungen vorteilhaft weiter. Es zeigen:
- Figur 1: eine Pumpe in axialer Sicht auf eine Förderkammer der Pumpe,
- Figur 2: die Pumpe in einer isometrischen Sicht auf eine Stirnseite, an der eine erfindungsgemäße Sickendichtung angeordnet ist,
- Figur 3: die Pumpe in einer axialen Sicht auf die Sickendichtung,
- Figur 4: die Pumpe in einem Längsschnitt,
- Figur 5: eine Anordnung der Pumpe in einem Aufnahmeschacht einer Aufnahmeeinrichtung in einem Längsschnitt,
- Figur 6: die Sickendichtung in einem Längsschnitt,
- Figur 7: einen Bereich der Sickendichtung im Längsschnitt der Figur 6,
- Figur 8: die Sickendichtung in einer isometrischen Darstellung,
- Figur 9: die Sickendichtung in einem Längsschnitt in isometrischer Darstellung
- Figur 10: die mittels der Sickendichtung abgedichtete axiale Fuge zwischen der Pumpe und der Aufnahmeeinrichtung in vergrößerter Darstellung, und
- Figur 11: ein Kraft-Weg-Diagramm für die versteifte Sickendichtung im Vergleich mit einer nicht versteiften Sickendichtung (Vergleichsdichtung).

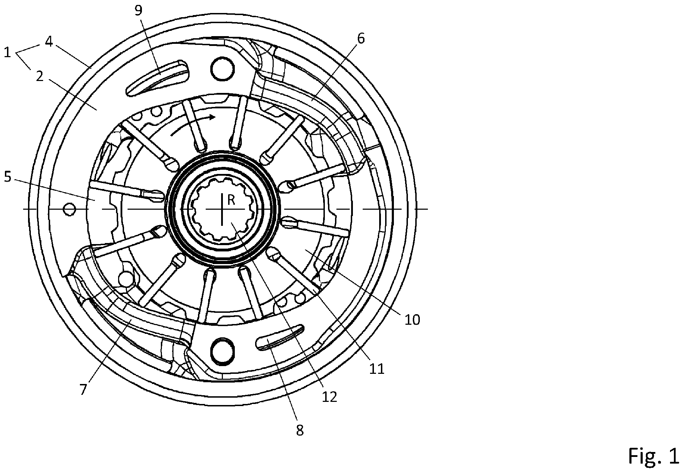

Figur 1 zeigt eine Pumpe in einer axialen Sicht auf ein Pumpengehäuse 1. Im Pumpengehäuse 1 ist eine Förderkammer 5 gebildet. Das Pumpengehäuse 1 umfasst eine Umfangswand 2, die die Förderkammer 5 umgibt, und Stirnwände, die die Förderkammer 5 an beiden Stirnseiten axial begrenzen und von denen die eine Stirnwand 4 erkennbar ist. Die andere der Stirnwände ist in Figur 1 abgenommen, so dass der Blick in die Förderkammer 5 frei ist.

Die Pumpe ist als Rotationspumpe ausgeführt und umfasst einen in der Förderkammer 5 um eine Drehachse R drehbaren Rotor 10 und mehrere Flügel 11, die in Schlitzen des Rotors 10 radial beweglich oder zumindest im Wesentlichen in radialer Richtung beweglich geführt sind, wie dies bei Flügelzellenpumpen üblich ist. Der Rotor 10 und die Flügel 11 bilden gemeinsam ein Förderrad der Pumpe. Die Umfangswand 2 weist an einem Innenumfang eine Führungsfläche für die Flügel 11 auf. Bei Drehung des Rotors 10 werden die Flügel 11 nach außen gegen die Führungsfläche der Umfangswand 2 gedrückt. Die Führungsfläche bestimmt bei Drehung des Rotors 10, wie weit die Flügel 11 über den Außenumfang des Rotors 10 vorstehen. Die Flügel 11 begrenzen in der Förderkammer 5 gebildete Förderzellen in Umfangsrichtung. Der Verlauf der Führungsfläche der Umfangswand 2 ist so gewählt, dass sich die Förderzellen bei Drehung des Rotors 10 periodisch auf einer Niederdruckseite der Förderkammer 5 vergrößern und auf einer Hochdruckseite der Förderkammer 5 wieder verkleinern, um ein Fluid, das durch einen Einlass auf der Niederdruckseite der Förderkammer 5 in die Förderkammer 5 strömt, mit erhöhtem Druck als Druckfluid auf der Hochdruckseite der Förderkammer 5 durch einen dort befindlichen Druckauslass auszustoßen. In vorteilhaften Ausgestaltungen ist die Pumpe dafür eingerichtet, das Fluid durch den Einlass anzusaugen, beispielsweise gegen die Schwerkraft.

Die Pumpe ist mehrflutig, im Ausgestaltungsbeispiel zweiflutig, weist also eine erste Arbeitsflut und eine zweite Arbeitsflut auf. Dementsprechend weist die Förderkammer 5 einen ersten Einlass 6 und einen ersten Druckauslass für die erste Arbeitsflut sowie einen zweiten Einlass 7 und einen zweiten Druckauslass für die zweite Arbeitsflut auf. Der Rotor 10 dreht sich im Pumpenbetrieb in Figur 1 im Uhrzeigersinn, was durch einen Drehrichtungspfeil angedeutet ist. Die Druckauslässe sind in der in Figur 1 nicht dargestellten Stirnwand angeordnet. Mit 8 ist ein auf der Hochdruckseite der ersten Arbeitsflut axial durch die Umfangswand 2 erstreckter erster Verbindungskanal und mit 9 ist ein auf der Hochdruckseite der zweiten Arbeitsflut axial durch die Umfangswand 2 erstreckter zweiter Verbindungskanal bezeichnet. Die Verbindungskanäle 8 und 9 verbinden im Bereich der Stirnwand 4 gebildete Druckräume mit den Druckauslässen der axial gegenüberliegenden, in Figur 1 nicht dargestellten Stirnwand des Pumpengehäuses 1.

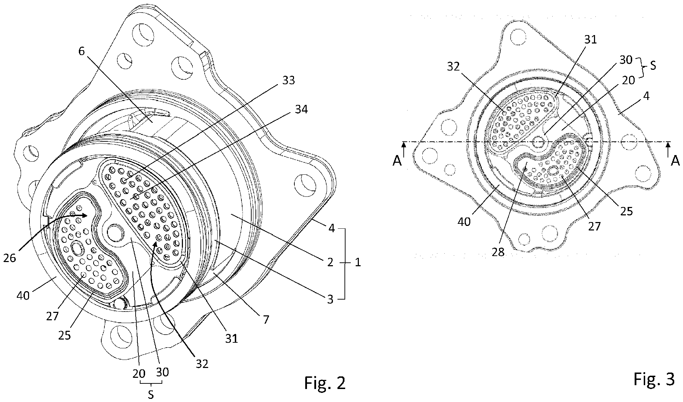

Figur 2 zeigt die Pumpe in einem vormontierten Zustand in einer Isometrie mit Sicht auf eine stirnseitige Auslassseite der Pumpe. Die Auslassseite ist an einer äußeren Stirnseite der in Figur 1 nicht dargestellten, aber in Figur 2 erkennbaren ersten Stirnwand 3 gebildet. An der äußeren Stirnseite der Stirnwand 3 ist eine Auslassdichtung in Form einer Sickendichtung S angeordnet, die im vormontierten Zustand die Druckauslässe verdeckt. Der erste Druckauslass und zweite Druckauslass münden an der äußeren Stirnseite der Stirnwand 3. Die in Figur 1 erkennbaren Verbindungskanäle 8 und 9 sind den Druckauslässen zugeordnet, wobei der Verbindungskanal 8 in den durch die Stirnwand 3 führenden ersten Druckauslass und der Verbindungskanal 9 in den ebenfalls durch die Stirnwand 3 führenden zweiten Druckauslass münden.

Die Sickendichtung S weist mehrere Sickenschleifen auf, die jeweils in Form einer Sickenschleife um einen Innenbereich der Sickendichtung S umlaufen. In Figur 2 sind eine Sickenschleife 25 und eine Sickenschleife 31 erkennbar. Die Sickenschleife 31 umgibt einen Innenbereich 32 der Sickendichtung S, der dem ersten Druckauslass axial gegenüberliegt und mit diesem in axialer Sicht überlappt. Die Sickenschleife 25 umgibt einen Innenbereich 26 der Sickendichtung S, der dem zweiten Druckauslass axial gegenüberliegt und in axialer Sicht mit diesem überlappt.

Die Pumpe umfasst ferner eine Federeinrichtung 40, die beispielhaft als Wellringfeder gebildet ist. Die Federeinrichtung 40 ist ebenfalls an der äußeren Stirnseite der Stirnwand 3 angeordnet. Sie übt im eingebauten Zustand der Pumpe eine axiale Federkraft auf das Pumpengehäuse 1 aus.

Die Umfangswand 2 bildet einen geschlossenen Ring, während die Stirnwände 3 und 4 jeweils plattenförmig sind. Die Umfangswand 2 weist in einem ersten Winkelbereich, über den sich die Niederdruckseite der ersten Arbeitsflut erstreckt, an beiden Stirnseiten jeweils eine Ausnehmung auf, um den ersten Einlass 6 zu bilden. Ferner weist die Umfangswand 2 in einem anderen Winkelbereich, über den sich die Niederdruckseite der zweiten Arbeitsflut erstreckt, an beiden Stirnseiten jeweils eine zweite Ausnehmung auf, um den zweiten Einlass 7 zu bilden. Das Fluid kann über die stirnseitigen Ausnehmungen der Umfangswand 2, das heißt über den ersten Einlass 6 und den zweiten Einlass 7, in die Förderkammer 5 (Figur 1) strömen. Die Umfangswand 2 weist im Winkelbereich des Einlasses 6 und im Winkelbereich des Einlasses 7 ferner jeweils eine Ausnehmung an ihrem äußeren Umfang auf. Die Ausnehmungen am Umfang erstrecken sich axial jeweils von der einen stirnseitigen Ausnehmung zur axial gegenüberliegenden anderen stirnseitigen Ausnehmung. Die Ausnehmungen am Umfang verbinden die beiden stirnseitigen Ausnehmungen des ersten Einlasses 6 und auf der gegenüberliegenden Seite die beiden stirnseitigen Ausnehmungen des zweiten Einlasses 7, sodass ein vergleichsweise großvolumiger erster Einlass 6 und ein ebenfalls großvolumiger zweiter Einlass 7 erhalten werden. Die Stirnwände 3 und 4 können jeweils mit zugeordneten Ausnehmungen versehen sein, um den Strömungsquerschnitt des Einlasses 6 und den Strömungsquerschnitt des Einlasses 7 zu vergrößern.

Figur 3 zeigt die Pumpe in einer axialen Sicht auf die Sickendichtung S. Die Sickendichtung S umfasst, wie bereits erwähnt, die Sickenschleife 31, die in der axialen Sicht um den ersten Druckauslass umläuft, und die Sickenschleife 25, die in der axialen Sicht um den zweiten Druckauslass umläuft.

In den Figuren 2 und 3 ist die Stirnwand 4 mit einem der Montage der Pumpe dienenden Flansch dargestellt. Dieser Flansch ist in der axialen Sicht der Figur 1 aus Gründen der Vereinfachung nicht dargestellt.

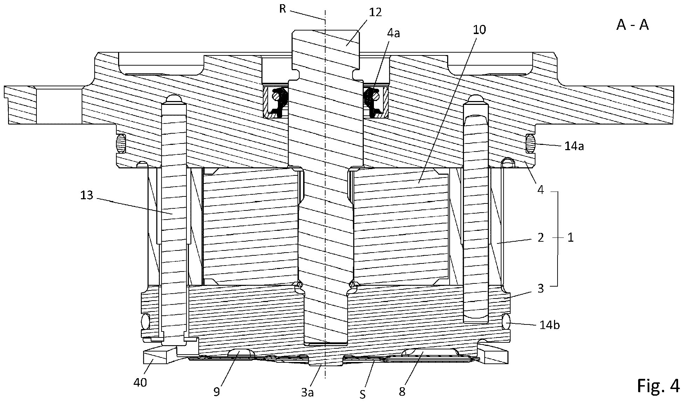

Figur 4 zeigt die Pumpe im vormontierten Zustand in dem in Figur 3 angegebenen Längsschnitt A-A. Das Pumpengehäuse 1 umfasst die bereits erwähnten Wandstrukturen, nämlich die Umfangswand 2, die erste Stirnwand 3 und die zweite Stirnwand 4, die gemeinsam die Förderkammer 5 (Figur 1) über ihren Umfang und axial an ihren Stirnseiten begrenzen. Die Stirnwände 3 und 4 liegen jeweils mit Axialkontakt an der Umfangswand 2 an. Die Umfangswand 2 kann mit den Stirnwänden 3 und 4 vorteilhafterweise lose, d. h. ohne Stoffschluss, gefügt sein.

Der Rotor 10 ist drehunbeweglich mit einer Antriebswelle 12 verbunden. Die Antriebswelle 12 durchsetzt die Stirnwand 4 und den Rotor 10 und ragt in eine Sackbohrung der Stirnwand 3. Die Antriebswelle 12 ragt mit einem Antriebsabschnitt über die Stirnwand 4 vor und kann in diesem Antriebsabschnitt drehangetrieben werden. Im Antriebsabschnitt kann ein Antriebsrad, beispielsweise eine Riemenscheibe für einen Riemenantrieb, ein Kettenrad für einen Kettenantrieb oder ein Zahnrad für einen Zahnradantrieb, drehunbeweglich mit der Antriebswelle 12 verbunden sein. Der Wellendurchtritt der Stirnwand 4 ist mittels einer Wellendichtung 4a abgedichtet.

Die Komponenten der Pumpe sind im vormontierten Zustand, wie bereits erwähnt, lose miteinander gefügt. Die Umfangswand 2 und die Stirnwände 3 und 4 werden innerhalb der vormontierten Pumpeneinheit mittels einer Halteeinrichtung in einem axialen Schichtverbund zusammengehalten. Die Halteeinrichtung umfasst wenigstens einen Halter 13, im Ausführungsbeispiel umfasst sie einen ersten Halter 13 und einen zweiten Halter 13. Der jeweilige Halter 13 ragt stabförmig in axialer Richtung von der zweiten Stirnwand 4 vor, durchragt die Umfangswand 2 in axialer Richtung und durchragt die erste Stirnwand 3 oder ragt in die erste Stirnwand 3 hinein. Im Ausführungsbeispiel durchragt einer der Halter 13 die erste Stirnwand 3, während der andere Halter 13 in eine Sackbohrung der Stirnwand 3 hineinragt. Die Halter 13 können mit der zweiten Stirnwand 4 reib- oder stoffschlüssig fest verbunden sein. Derjenige Halter 13, der die erste Stirnwand 3 durchragt, ist mit der ersten Stirnwand 3 in einem auf Formschluss beruhenden Halteeingriff. Der Halteeingriff ist derart, dass der betreffende Halter 13 von der Stirnwand 4 aus gesehen durch einen Durchgang der Stirnwand 3 geführt, aber nach dem Durchführen, beispielsweise aufgrund einer Verliersicherung, nicht mehr zurückgezogen werden kann.

Bei der Vormontage werden die Umfangswand 2 und die erste Stirnwand 3 längs der Halter 13 in Richtung auf die Stirnwand 4 geschoben, bis der eine der Halter 13 durch die Stirnwand 3 ragt und mit dieser in den Halteeingriff gelangt oder durch die Verliersicherung gebracht werden kann. Der andere Halter 13 dient der korrekten Positionierung der Umfangswand 2 und der Stirnwand 3 in Bezug auf die Drehwinkelposition.

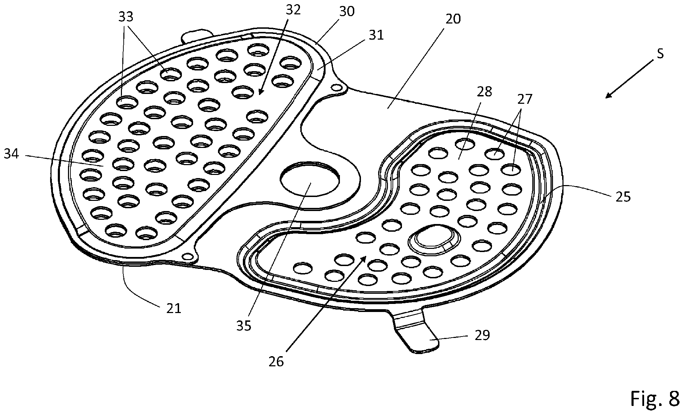

Die Sickendichtung S wird an der äußeren Stirnseite der Stirnwand 3 am Pumpengehäuse 1 gehalten. Zur Zentrierung weist die Sickendichtung S einen zentralen Durchgang 35 (Fig. 8) auf, der bei der Vormontage auf eine axiale Abragung 3a an der äußeren Stirnseite der Stirnwand 3 geschoben wird. Die Federeinrichtung 40 ist im vormontierten Zustand ebenfalls an der äußeren Stirnseite der Stirnwand 3 gehalten. Das mittels der Halter 13 als loser Schichtverbund zusammengehaltene Pumpengehäuse 1 bildet mit der Sickendichtung S und der Federeinrichtung 40 die vormontierte Pumpeneinheit in Form einer einfach im Ganzen zu montierenden Montageeinheit. Diese Montageeinheit umfasst ferner einen ersten Dichtring 14a, der in einer am äußeren Umfang der Stirnwand 4 umlaufenden Nut aufgenommen ist, und einen zweiten Dichtring 14b, der in einer am äußeren Umfang der Stirnwand 3 umlaufenden Nut aufgenommen ist. Die Dichtringe 14a und 14b dienen der Abdichtung eines Niederdruckraums, der die Pumpe im montierten Zustand am äußeren Umfang umgibt.

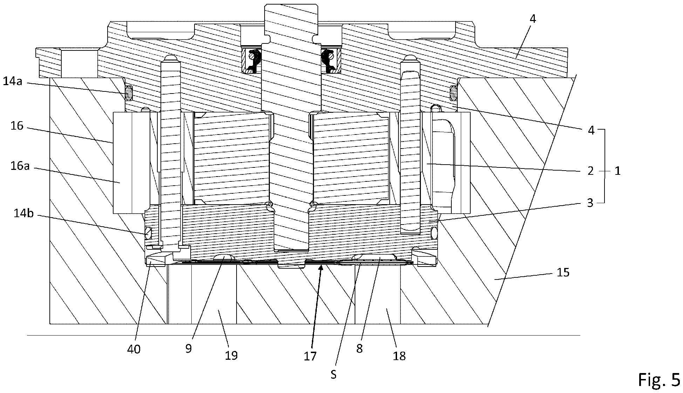

Figur 5 zeigt die Pumpe im montierten Zustand, wobei die Pumpe als solche wieder im Schnitt A-A der Figur 3 dargestellt ist. Die Pumpe ist an einer Aufnahmeeinrichtung 15 angeordnet. Die Anordnung ist derart, dass die Pumpe mit der Sickendichtung S voran in einen Aufnahmeschacht 16 der Aufnahmeeinrichtung 15 ragt. Die Pumpe liegt mit dem Montageflansch der Stirnwand 4 an der Aufnahmeeinrichtung 15 an und ist im Bereich des Flansches an der Aufnahmeeinrichtung 15 befestigt, beispielsweise mittels Schraubverbindung.

Die Pumpe ragt mit ihrer Anschlussseite voran in den Aufnahmeschacht 16, so dass die äußere Stirnseite der Stirnwand 3 einem Boden 17 des Aufnahmeschachts 16 in einem geringen axialen Abstand, d. h. über eine axiale Fuge, gegenüberliegt.

Die Federeinrichtung 40 stützt sich im montierten Zustand der Pumpe axial am Schachtboden 17 ab und wirkt mit ihrer Federkraft axial auf die Stirnwand 3. Die Federeinrichtung 40 drückt in dieser Weise mit Federkraft die Stirnwand 3 gegen die Umfangswand 2 und diese gegen die Stirnwand 4, wodurch ein axial dichter und fester Verbund der Stirnwände 3 und 4 und der Umfangswand 2 erhalten und die Abdichtung der Förderkammer 5 (Figur 1) gewährleistet wird.

Am äußeren Umfang des Pumpengehäuses 1 ist ein Niederdruckraum 16a gebildet, den radial außen eine innere Umfangswand des Aufnahmeschachts 16 und axial die Dichtringe 14a und 14b begrenzen. Im Pumpenbetrieb gelangt das Fluid über den Niederdruckraum 16a und die im Niederdruckraum 16a mündenden Einlässe 6 und 7 (Figuren 1 und 2) in die Förderkammer 5 (Figur 1). Am Schachtboden 17 münden auf der Hochdruckseite der Pumpe ein erster Druckanschluss 18 und ein zweiter Druckanschluss 19, über die das Fluid in axialer Richtung abförderbar ist. Wie anhand der Figur 1 bereits beschrieben, wird das Fluid im Bereich der ersten Arbeitsflut über einen durch die Stirnwand 3 führenden ersten Druckauslass und im Bereich der zweiten Arbeitsflut über einen ebenfalls durch die Stirnwand 3 führenden zweiten Druckauslass abgefördert. Die in Figur 1 erkennbaren Verbindungskanäle 8 und 9 münden in die zugeordneten Druckauslässe, der Verbindungskanal 8 in den ersten Druckauslass und der Verbindungskanal 9 in den zweiten Druckauslass. Der erste Druckauslass wird im Folgenden daher als Druckauslass 8 und der zweite Druckauslass als Druckauslass 9 bezeichnet. Die Druckauslässe 8 und 9 erstrecken sich axial durch die Stirnwand 3 und münden an der äußeren Stirnseite der Stirnwand 3 jeweils in einer Vertiefung. Diese Vertiefungen sind in Figur 5 erkennbar und werden hier ebenfalls als erster Druckauslass 8 und zweiter Druckauslass 9 bezeichnet. Der erste Druckauslass 8 der Pumpe liegt dem ersten Druckanschluss 18 axial gegenüber. Der zweite Druckauslass 9 der Pumpe liegt dem zweiten Druckanschluss 19 gegenüber. Im Pumpenbetrieb wird das Fluid der ersten Arbeitsflut über den ersten Druckauslass 8 und den ersten Druckanschluss 18 abgefördert. Das Fluid der zweiten Arbeitsflut wird über den zweiten Druckauslass 9 und den zweiten Druckanschluss 19 abgefördert.

Die Auslassdichtung S ist in der zwischen der Stirnwand 3 und dem Schachtboden 17 verbleibenden axialen Fuge angeordnet und trennt den ersten Druckauslass 8 und ersten Druckanschluss 18 vom zweiten Druckauslass 9 und zweiten Druckanschluss 19.

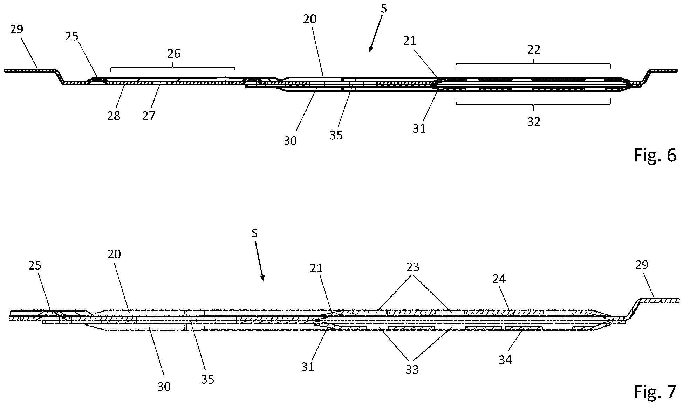

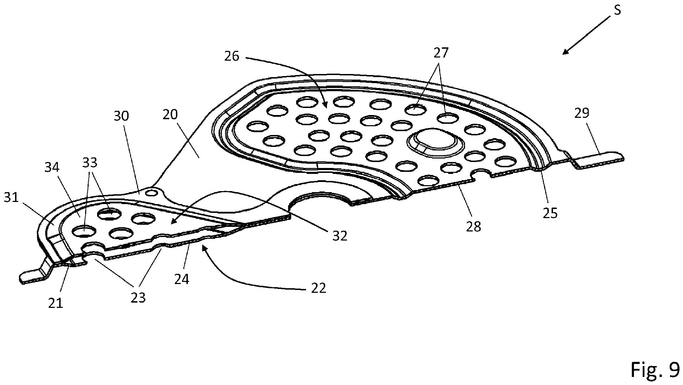

Die Figuren 6 bis 9 zeigen die Sickendichtung S als solche, losgelöst von der Pumpe. Figur 6 ist ein Längsschnitt, der durch den der Halterung an der Stirnwand 3 dienenden zentralen Durchgang 35 der Sickendichtung S verläuft. Figur 7 ist eine vergrößerte Darstellung eines Teilbereichs des Längsschnitts der Figur 6. Figur 8 ist eine isometrische Sicht auf die im vormontierten und montierten Zustand der Pumpe von der Stirnwand 3 weg weisende Außenseite der Sickendichtung S. Figur 9 zeigt die Sickendichtung S ebenfalls in einer isometrischen Sicht, aber längs geschnitten.

Die Sickendichtung S umfasst eine erste Sickenschleife 21, die einen ersten Innenbereich 22 umgibt. Die Sickenschleife 21 ist in Bezug auf den Innenbereich 22 eine kleinste Sickenschleife, die den Innenbereich 22 in axialer Draufsicht einschließt, d. h. vollständig umgibt. Die Sickenschleife 21 ist eine Halbsicke, wie insbesondere in Figur 7, aber auch im vollständigen Längsschnitt der Figur 6 und in Figur 9 erkennbar ist.

Die erste Sickenschleife 21 ist im Innenbereich 22 im Vergleich zu herkömmlichen Sickenschleifen versteift. Die Versteifung wird mittels einer ersten Versteifungsstruktur 24 erzielt, die sich vom Innenrand der Sickenschleife 21 umlaufend in den Innenbereich 22 erstreckt. Die Versteifungsstruktur 24 ist als plane, dünne Scheibe geformt. Sie weist eine Mehrzahl nebeneinander angeordneter Durchgänge 23 auf, durch die im Pumpenbetrieb das Fluid strömen kann. Die Versteifungsstruktur 24 erstreckt sich längs des gesamten Innenumfangs der Sickenschleife 21 und steift die Sickenschleife 21 über den gesamten Innenumfang nach radial innen gleichmäßig aus. Die Durchgänge 23 sind kreisrunde Durchgangsbohrungen, können in Abwandlungen aber auch grundsätzlich andere Querschnittsformen haben, beispielsweise langgestreckte, gerade oder gebogene Schlitze sein.

Die Sickendichtung S weist ferner die bereits in den Figuren 2 und 3 erkennbare weitere, zweite Sickenschleife 25 auf, die in der axialen Sicht den zweiten Innenbereich 26 umgibt. Die Sickenschleife 25 bildet in Bezug auf den Innenbereich 26 eine kleinste Sickenschleife, die in der axialen Sicht den Innenbereich 26 einschließt, d. h. vollständig umgibt. Die zweite Sickenschleife 25 ist eine Vollsicke. Auch die Sickenschleife 25 ist in ihrem Innenbereich 26 versteift. Der Versteifung dient eine zweite Versteifungsstruktur 28, die wie die erste Versteifungsstruktur 24 als plane, dünne Scheibe geformt ist. Wie am besten in den Figuren 8 und 9 zu erkennen ist, erstreckt sich auch die Versteifungsstruktur 28 gleichmäßig über den gesamten Innenumfang der Sickenschleife 25, um diese über den Innenumfang gleichmäßig nach radial innen auszusteifen. Der ersten Versteifungsstruktur 24 vergleichbar, ist auch die zweite Versteifungsstruktur 28 mit einer Mehrzahl von nebeneinander angeordneten Durchgängen 27 für das von der Pumpe geförderte Fluid versehen. Die Durchgänge 27 sind ebenfalls als kreisrunde Durchgangsbohrungen geformt, können in Abwandlungen aber auch andere Querschnittsformen haben, beispielsweise als langgestreckte, gerade Schlitze oder langgestreckte, gebogene Schlitze geformt sein.

Die erste Sickenschleife 21 und die zweite Sickenschleife 25 sind in der axialen Sicht nebeneinander angeordnet, so dass auch die zugehörigen Innenbereiche 22 und 26 nebeneinander und mit Abstand voneinander angeordnet sind. Im Ausführungsbeispiel verlaufen auch die Sickenschleifen 21 und 25 separat in einem Abstand voneinander. Zwischen den Sickenschleifen 21 und 25 befindet sich beispielsweise der zentrale Durchgang 35, welcher der Zentrierung der Sickendichtung S am Pumpengehäuse 1 dient.

Die Sickendichtung S umfasst ferner die bereits in den Figuren 2 und 3 erkennbare weitere, dritte Sickenschleife 31, die den weiteren, dritten Innenbereich 32 umgibt. Die Sickenschleife 31 ist in Bezug auf den Innenbereich 32 eine kleinste Sickenschleife, die den Innenbereich 32 in der axialen Sicht einschließt, d. h. vollständig umgibt. Die Sickenschleife 31 ist der Sickenschleife 21 vergleichbar nach radial innen versteift. Der Versteifung dient eine dritte Versteifungsstruktur 34, die als plane, dünne Scheibe geformt ist. Die dritte Versteifungsstruktur 34 entspricht der ersten Versteifungsstruktur 24 und weist wie diese Durchgänge 33 für das Fluid auf. In Bezug auf die Durchgänge 33 gilt das zu den Durchgängen 23 Gesagte in gleicher Weise. Die Durchgänge 33 liegen in der axialen Flucht zu den Durchgängen 23, so dass das Fluid in axialer Richtung auf kürzestem Wege die Sickendichtung S im Bereich der beiden Innenbereiche 22 und 32 durchströmen kann. In Abwandlungen können die Durchgänge 33 jedoch auch in radialer Richtung zu den Durchgängen 23 versetzt sein, um den Strömungswiderstand für das Fluid bei sonst gleicher Form und Anzahl der Durchgänge 22 und 33 zu erhöhen.

Im Ausführungsbeispiel überlappen in der axialen Sicht nicht nur der erste Innenbereich 22 und der dritte Innenbereich 32, sondern auch die erste Sickenschleife 21 und die dritte Sickenschleife 31 über ihren gesamten Verlauf. Die dritte Sickenschleife 31 ist der ersten Sickenschleife 21 entsprechend als Halbsicke geformt. Die Sickenschleifen 21 und 31 spreizen sich von ihrem Außenumfang ausgehend in axialer Richtung zu den Innenbereichen 22 und 32 hin voneinander weg, wodurch der axiale Federweg der Sickendichtung S im Bereich der Sickenschleifen 21 und 31 im Vergleich zu der jeweiligen Einzelsicke 21 und 31 vergrößert wird. Die Vergrößerung des axialen Federwegs ist im Hinblick auf die gewünschte Kompensation von Variationen der axialen Weite der abzudichtenden Fuge vorteilhaft.

Die Sickendichtung S ist mehrlagig. Sie umfasst eine erste Dichtungslage 20 und eine zweite Dichtungslage 30. Die erste Sickenschleife 21 und die erste Versteifungsstruktur 24 sind Bestandteil der ersten Dichtungslage 20. Die zweite Dichtungslage 30 bildet die dritte Dichtungssicke 31 und die dritte Versteifungsstruktur 34. Die Dichtungslagen 20 und 30 liegen unmittelbar aufeinander. Sie können vorteilhafterweise stoffschlüssig miteinander gefügt sein, beispielsweise mittels Schweiß- oder Lötverbindung oder einer Klebeverbindung.

Die erste Dichtungslage 20 bildet auch die zweite Sickenschleife 25 und deren Versteifungsstruktur 28.

Die Dichtungslagen 20 und 30 sind Blechstrukturen. Insbesondere kann es sich um Stahlblechstrukturen und bevorzugt um Federstahlstrukturen handeln. Grundsätzlich können die Blechstrukturen aber auch Kunststoffstrukturen sein, beispielsweise so genannte Organoblechstrukturen. Stahlblech wird jedoch der Vorzug gegeben.

Die Sickendichtung S weist am Außenumfang nach außen vorragende Laschen 29 auf, die der Positionierung der Sickendichtung S relativ zum Pumpengehäuse 1 dienen und mit entsprechenden Positionierelementen des Pumpengehäuses 1, beispielsweise axialen Vorsprüngen an der Stirnwand 3, zusammenwirken. Die Laschen 29 können einen Passverbund mit der Stirnwand 3 bilden oder formschlüssig in die Stirnwand 3 eingreifen, vorzugsweise reibschlussfrei. Die Laschen 29 dienen zusätzlich auch der Halterung am Pumpengehäuse 1. Hierzu können die Laschen 29 mit der Stirnwand 3 beispielsweise verschraubt, gelötet, geschweißt, geklebt etc. werden. Im Ausführungsbeispiel hintergreifen die Laschen 29 jedoch die Federeinrichtung 40, so dass die Sickendichtung S zentriert und positioniert im Hintergriff der Federeinrichtung 40 am Pumpengehäuse 1 gehalten wird.

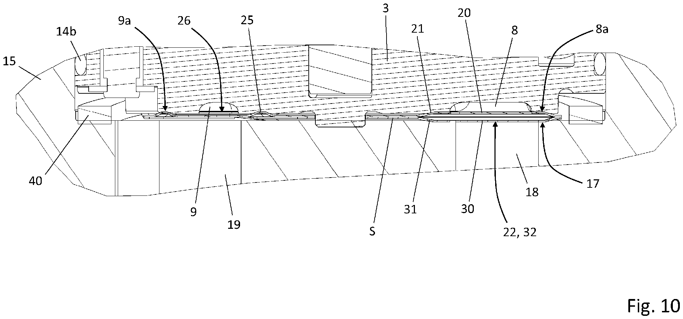

Figur 10 zeigt in vergrößerter Darstellung den Bereich der axialen Fuge zwischen der Stirnwand 3 und dem Schachtboden 17. Die Sickendichtung S ist in der Fuge angeordnet und trennt den ersten Druckauslass 8 und ersten Druckanschluss 18 vom zweiten Druckauslass 9 und zweiten Druckanschluss 19. Die erste Sickenschleife 21 umschließt den ersten Druckauslass 8 fluiddicht. Die dritte Sickenschleife 31 umschließt den ersten Druckanschluss 18 fluiddicht. Im Ausführungsbeispiel mündet der erste Druckauslass 8 wie bereits erwähnt in einer Vertiefung an der äußeren Stirnseite der Stirnwand 3. Diese Vertiefung wird dem ersten Druckauslass 8 zugerechnet und deshalb ebenfalls mit dem Bezugszeichen 8 bezeichnet. Die erste Sickenschleife 21 umschließt fluiddicht die Vertiefung des ersten Druckauslasses 8. Zur Abdichtung liegt die erste Sickenschleife 21 an einem Umfangsrand 8a der Vertiefung, d. h. des ersten Druckauslasses 8 dichtend an. Der Umfangsrand 8a umschließt den ersten Druckauslass 8, im Ausführungsbeispiel umschließt er dessen Vertiefung an der äußeren Stirnseite der Stirnwand 3, an der der Druckauslass 8 mündet. Die dritte Sickenschleife 31 liegt an dem vom Schachtboden 17 gebildeten Umfangsrand des ersten Druckanschlusses 18 dichtend an. Die Sickenschleifen 21 und 31 drücken jeweils mit axialer Federkraft gegen den zugeordneten Umfangsrand 8a und 17.

Die Sickendichtung S ist vorteilhafterweise mit einer axialen Vorspannkraft eingebaut. Die Vorspannkraft ist zweckmäßigerweise so gewählt, dass sie unter allen Einbaubedingungen, d. h. in Bezug auf die unvermeidlichen Bauteil- und Einbautoleranzen und darüber hinaus auch in Bezug auf die mit Temperatur- und/oder Druckänderungen einhergehenden Variationen der axialen Weite der Fuge eine für die Dichtigkeit ausreichende Federkraft gewährleistet. In vorteilhaften Ausführungen ist die Sickendichtung S im Bereich der Sickenschleifen 21 und 31 so ausgelegt, dass sie Variationen der axialen Fugenweite von wenigstens 0,1 mm oder wenigstens 0,2 mm, vorzugsweise von 0,3 mm oder mehr, ausgleichen kann, d. h. über den jeweiligen Variationsbereich der axialen Fugenweite eine ausreichende Abdichtung gewährleistet.

Die zweite Sickenschleife 25 kann so gestaltet sein, dass sie dichtend an einem den zweiten Druckauslass 9 umgebenden Umfangsrand 9a und zugleich am axial gegenüberliegenden Schachtboden 17, dort den zweiten Druckanschluss 19 umgebend, dichtend anliegt. Im Ausführungsbeispiel liegt die zweite Sickenschleife 25 im montierten Zustand der Pumpe allerdings nur an der äußeren Stirnseite der Stirnwand 3, d. h. am genannten Umfangsrand 9a, mit einer gewissen Vorspannkraft an, hat aber mit dem Schachtboden 17 keinen Kontakt oder zumindest keinen Dichtkontakt. Vorteilhaft ist, wenn die Sickendichtung S im montierten Zustand der Pumpe mit einer gewissen axialen Vorspannkraft gegen den Umfangsrand 9a an der äußeren Stirnseite der Stirnwand 3 drückt. Die Trennung vom ersten Druckauslass 8 und ersten Druckanschluss 18 wird durch die erste Sickenschleife 21 und dritte Sickenschleife 31 erhalten. Die Trennung von der Niederdruckseite der Pumpe, insbesondere vom Niederdruckraum 16a (Figur 5) wird durch den Dichtring 14b gewährleistet.

Die Sickendichtung S liegt mit ihren Innenbereichen 22 und 32 dem ersten Druckauslass 8 und ersten Druckanschluss 18 und mit ihrem Innenbereich 26 dem zweiten Druckauslass 9 und zweiten Druckanschluss 19 axial gegenüber. Die Innenbereiche 22 und 32 überdecken den ersten Druckauslass 8 und ersten Druckanschluss 18. Der Innenbereich 26 überdeckt den zweiten Druckauslass 9 und zweiten Druckanschluss 19. Wie bevorzugt überdecken die Innenbereiche 22 und 32 die Vertiefung, zu der sich der Druckauslass 8 an der äußeren Stirnseite der Stirnwand 3 verbreitert. Wie bevorzugt überdeckt der Innenbereich 26 die Vertiefung, zu der sich der Druckauslass 9 an der äußeren Stirnseite der Stirnwand 3 verbreitert. Das Fluid wird im Pumpenbetrieb durch die Druckauslässe 8 und 9 gefördert und im Bereich der jeweils zugeordneten Vertiefung über die von den Sickenschleifen 21, 31 und 25 umschlossenen Innenbereiche 22, 32 und 26 verteilt. Das unter Druck stehende Fluid durchströmt anschließend die in der jeweiligen Versteifungsstruktur 24, 34 und 28 vorhandenen lokalen Durchgänge 23, 33 und 27 (Figur 9) und strömt über den jeweils anschließenden Druckanschluss 18 und 19 ab. Die Versteifungsstrukturen mit ihren Durchgängen sorgen für eine Vergleichmäßigung der Strömung, insbesondere sorgen sie für einen Abbau von Druckspitzen im kalten Betriebszustand und entsprechend zähem Fluid. Die Versteifungsstrukturen stellen einen Strömungswiderstand bereit, damit beim Kaltstart die Unterflügelnuten rasch mit dem Druckfluid versorgt werden.

Die Sickendichtung S kann in einem montierten Ausgangszustand der Pumpe unter einer axialen Vorspannkraft stehen, so dass sie elastisch axial eingefedert ist und auf das Pumpengehäuse 1 eine axiale Federkraft entsprechend der Vorspannkraft ausübt.

Die Sickendichtung S kann in einem Kraftnebenschluss zu einer Rückstelleinrichtung angeordnet sein. Die Rückstelleinrichtung nimmt vorzugsweise den überwiegenden Teil der bei Verringerung der Fugenweite über die Fuge wirkenden Axialkraft auf. Die Sickendichtung S kann insbesondere im Kraftnebenschluss zu einer axial wirkenden Federeinrichtung angeordnet sein. Im Ausführungsbeispiel ist die Sickendichtung S in einem Kraftnebenschluss zur Federeinrichtung 40 angeordnet. Die Sickendichtung S kann alternativ aber auch in einem Krafthauptschluss angeordnet sein und alleine eine axiale Federkraft auf das Pumpengehäuse 1 ausüben, also die Funktion der Federeinrichtung 40 übernehmen und diese ersetzen.

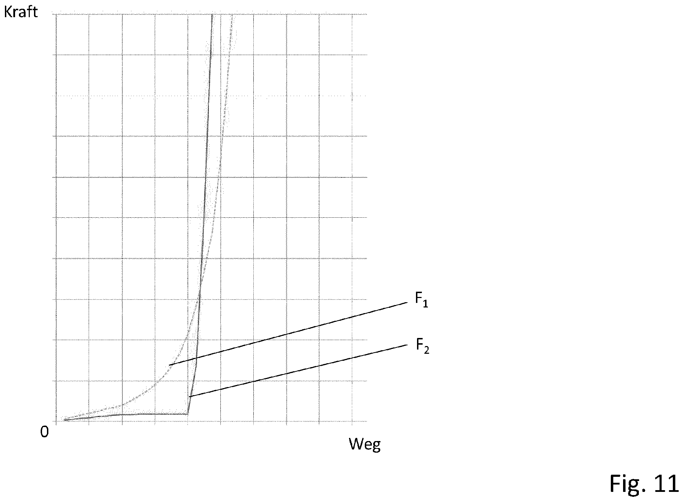

Im Kraft-Weg-Diagramm der Figur 11 ist die versteifte Sickendichtung S einer nicht versteiften Sickendichtung (Vergleichsdichtung) gegenübergestellt. F₁ bezeichnet den wegabhängigen Kraftverlauf der Sickendichtung S im Bereich der ersten Sickenschleife 21 und dritten Sickenschleife 31. F₂ bezeichnet den wegabhängigen Kraftverlauf der Vergleichsdichtung. Die Vergleichsdichtung entspricht in Bezug auf die Sickenschleifen 21, 25 und 31 als solche der Sickendichtung S, weist aber keine Versteifungsstruktur auf, die im vormontierten oder montierten Zustand der Pumpe in den Strömungsquerschnitt des Fluids vorragt und im Pumpenbetrieb somit in das Fluid hineinragt und von diesem angeströmt wird. Im Diagramm wird unterstellt, dass die jeweilige Sickendichtung im Ausgangszustand unbelastet ist, d. h. keine Kraft außer Schwerkraft auf sie wirkt.

Die Vergleichsdichtung setzt einem axialen Einfedern über einen Bereich von einigen Zehntel Millimetern eine vergleichsweise geringe Federkraft entgegen und knickt bei einer bestimmten Verringerung ihrer axialen Weite praktisch schlagartig ein. Die versteifte Sickendichtung S kann hingegen mit einer axialen Vorspannkraft, die wenigstens so groß wie eine zur Gewährleistung der Dichtigkeit erforderliche Mindestfederkraft und größer als die Federkraft ist, bei deren Erreichen die Vergleichsdichtung einknickt, eingebaut werden. Die Mindestfederkraft ist zweckmäßigerweise auf eine größte axiale Fugenweite bezogen, die sich aufgrund der Einbautoleranzen und betriebsbedingt einstellen kann. Variationen der Fugenweite, die im Betrieb aufgrund von Temperaturänderungen und Druckpulsationen auftreten, sind allerdings deutlich kleiner als die von Pumpe zu Pumpe von den Toleranzketten herrührenden Variationen. Die Vorspannkraft garantiert, dass bei größter Fugenweite wenigstens die Mindestfederkraft auf die Sickenschleifen 21 und 31 wirkt. Die Vorspannkraft ist vorteilhafterweise so gewählt, dass die Steigung der Kraft-über-Weg-Kurve kleiner als 45° oder kleiner als 30° ist. Von der Vorspannkraft ausgehend weist die versteifte Sickendichtung S einen vergleichsweise großen Bereich auf, in dem die axiale Fugenweite variieren kann, die Sickendichtung S aber dennoch ihre Federwirkung nicht verliert, also allenfalls unwesentlich plastisch verformt wird, und stets mit ausreichender Federkraft gegen den jeweils abzudichtenden Umfangsrand, im Ausführungsbeispiel gegen den Umfangsrand 9a und den Schachtboden 17 (Fig. 10), drückt.

## Patentansprüche

1. Sickendichtung zum Abdichten einer axialen Fuge zwischen einem ersten Bauteil (1) und einem zweiten Bauteil (15), die Sickendichtung (S) umfassend:
(a) eine erste Sickenschleife (21), die in einer axialen Sicht einen ersten Innenbereich (22) umgibt und eine Sickenstirnfläche für axialen Kontakt mit einem der Bauteile (1, 15) aufweist,
(b) einen im ersten Innenbereich (22) gelegenen Durchgang (23) für Fluid,
(c) wobei die erste Sickenschleife (21) eine kleinste, den Durchgang (23) umgebende Sickenschleife ist, und
(d) eine erste Versteifungsstruktur (24), die sich in der axialen Sicht von der ersten Sickenschleife (21) in den ersten Innenbereich (22) erstreckt, um die erste Sickenschleife (21) zu versteifen.

2. Sickendichtung nach dem vorhergehenden Anspruch, umfassend:
- eine zweite Sickenschleife (25), die in der axialen Sicht einen neben dem ersten Innenbereich (22) gelegenen zweiten Innenbereich (26) umgibt und eine Sickenstirnfläche für axialen Kontakt mit einem der Bauteile (1, 15) aufweist, und
- einen im zweiten Innenbereich (26) gelegenen Durchgang (27) für Fluid.

3. Sickendichtung nach dem vorhergehenden Anspruch, umfassend eine zweite Versteifungsstruktur (28), die sich von der zweiten Sickenschleife (25) in den zweiten Innenbereich (26) erstreckt, um die zweite Sickenschleife (25) zu versteifen.

4. Sickendichtung nach einem der vorhergehenden Ansprüche, umfassend eine dritte Sickenschleife (31), die in der axialen Sicht einen dritten Innenbereich (32) mit einem Durchgang (33) für das Fluid umgibt und eine Sickenstirnfläche für axialen Kontakt mit dem anderen der Bauteile (1, 15) aufweist, wobei
- die erste Sickenschleife (21) und die dritte Sickenschleife (31) axial übereinander, vorzugsweise direkt übereinander, angeordnet sind,
- der erste Innenbereich (22) und der dritte Innenbereich (32) in der axialen Sicht überlappen und
- die Sickenstirnfläche der ersten Sickenschleife (21) von der Sickenstirnfläche der dritten Sickenschleife (31) axial abgewandt ist.

5. Sickendichtung nach einem der vorhergehenden Ansprüche, umfassend:
- eine erste Dichtungslage (20), welche die erste Sickenschleife (21), den ersten Innenbereich (22) und die erste Versteifungsstruktur (24) aufweist, und
- eine zweite Dichtungslage (30) mit einer dritten Sickenschleife (31), die einen dritten Innenbereich (32), in dem ein Durchgang (33) für das Fluid gelegen ist, umgibt, wobei
- die Dichtungslagen (20, 30) axial übereinander, vorzugsweise unmittelbar aufeinander, liegen,
- die dritte Sickenschleife (31) für einen axialen Kontakt mit dem anderen der Bauteile (1, 15) eine Sickenstirnfläche aufweist, die von der Sickenstirnfläche der ersten Sickenschleife (21) axial abgewandt ist, und
- der erste Innenbereich (22) und der dritte Innenbereich (32) in der axialen Sicht überlappen.

6. Sickendichtung nach dem vorhergehenden Anspruch in Kombination mit Anspruch 2, wobei die erste Dichtungslage (20) die zweite Sickenschleife (25) und den zweiten Innenbereich (26) aufweist.

7. Sickendichtung nach einem der drei unmittelbar vorhergehenden Ansprüche, umfassend eine dritte Versteifungsstruktur (34), die sich von der dritten Sickenschleife (31) in den dritten Innenbereich (32) erstreckt, um die dritte Sickenschleife (31) zu versteifen.

8. Sickendichtung nach einem der vier unmittelbar vorhergehenden Ansprüche, wobei sich die erste Sickenschleife (21) und die dritte Sickenschleife (31) in Richtung auf den jeweils umgebenen Innenbereich (22, 32) und die jeweilige Sickenstirnfläche axial voneinander weg spreizen, so dass zwischen diesen Sickenstirnflächen ein verlängerter axialer Federweg erhalten wird.

9. Sickendichtung nach einem der vorhergehenden Ansprüche, wobei die jeweilige Versteifungsstruktur (24, 28, 34) scheiben- oder schalenförmig ist.

10. Sickendichtung nach einem der vorhergehenden Ansprüche, wobei die jeweilige Versteifungsstruktur (24, 28, 34) in axialer Draufsicht nebeneinander mehrere voneinander getrennte, von der zugeordneten Sickenschleife (21, 25, 31) gemeinsam umgebene Durchgänge (23, 27, 33) aufweist.

11. Sickendichtung nach einem der vorhergehenden Ansprüche, wobei sich die jeweilige Versteifungsstruktur (24, 28, 34) über wenigstens den überwiegenden Teil des inneren Umfangs der zugehörigen Sickenschleife (21, 25, 31) mit einer in der axialen Sicht radialen Breite, die wenigstens der radialen Breite der zugehörigen Sickenschleife (21, 25, 31) entspricht, erstreckt.

12. Pumpe zur Beaufschlagung eines Aggregats, beispielsweise eines Getriebes, mit Fluid, die Pumpe umfassend:
(a) ein Pumpengehäuse (1) mit einer Umfangswand (2), die eine Förderkammer (5) der Pumpe umgibt, einer ersten Stirnwand (3) und einer zweiten Stirnwand (4), die die Förderkammer (5) an ihren Stirnseiten begrenzen,
(b) einen Einlass (6) für das Fluid auf einer Niederdruckseite des Pumpengehäuses (1) und einen Auslass (8), durch den Fluid auf einer Hochdruckseite des Pumpengehäuses (1) aus der Förderkammer (5) förderbar ist,
(c) ein in der Förderkammer (5) bewegliches Förderglied zur Förderung des Fluids von der Niederdruckseite zur Hochdruckseite, und
(d) eine Sickendichtung (S) mit einer ersten Sickenschleife (21), die in einer axialen Sicht auf die Sickendichtung (S) einen vom Fluid axial durchströmbaren ersten Innenbereich (22) der Sickendichtung (S) umgibt und den Auslass (8) oder die Förderkammer (5) zur Abdichtung in einem stirnseitigen, bezüglich der ersten Sickenschleife (21) axialen Kontakt umgibt.

13. Pumpe nach dem vorhergehenden Anspruch, wobei der Auslass (8) an einer von der Förderkammer (5) abgewandten äußeren Stirnseite der ersten Stirnwand (3) mündet und die Sickendichtung (S) am Pumpengehäuse (1) gehalten ist, so dass sie der äußeren Stirnseite der ersten Stirnwand (3) zur Abdichtung des Auslasses (8) axial zugewandt ist, vorzugsweise an der äußeren Stirnseite der ersten Stirnwand (3) im axialen Kontakt anliegt.

14. Pumpe nach einem der zwei unmittelbar vorhergehenden Ansprüche, wobei
- die Sickendichtung (S) eine dritte Sickenschleife (31) umfasst, die in der axialen Sicht einen vom Fluid durchströmbaren dritten Innenbereich (32) der Sickendichtung (S) umgibt, wobei
- der erste Innenbereich (22) und der dritte Innenbereich (32) in der axialen Sicht überlappen und
- eine den Auslass (8) umgebende äußere Sickenstirnfläche der ersten Sickenschleife (21) dem Pumpengehäuse (1) axial zugewandt und einer äußeren Sickenstirnfläche der dritten Sickenschleife (31) axial abgewandt ist.

15. Pumpe nach einem der drei unmittelbar vorhergehenden Ansprüche, wobei die Pumpe an einer Aufnahmeeinrichtung (15) angeordnet ist, die Aufnahmeeinrichtung (15) eine dem Auslass (8) axial gegenüberliegende Stirnwand (17), vorzugsweise ein Schachtboden (17), mit einem Druckanschluss (18) aufweist und die dritte Sickenschleife (31) den Druckanschluss (18) in axialem Kontakt mit der Stirnwand (17) der Aufnahmeeinrichtung (15) umgibt, so dass der Auslass (8) mit dem Druckanschluss (18) fluiddicht verbunden ist.

16. Pumpe nach einem der Ansprüche 12 bis 15, wobei die Sickendichtung (S) im montierten Zustand der Pumpe über die erste Sickenschleife (21) entweder in einem Kraftnebenschluss zu einer Federeinrichtung (40) oder in einem Krafthauptschluss eine axiale Federkraft auf das Pumpengehäuse (1) ausübt.

17. Pumpe nach einem der Ansprüche 12 bis 16, wobei die Pumpe eine Getriebepumpe und/oder eine Schmier- und/oder Kühlmittelpumpe oder eine Vakuumpumpe für ein Kraftfahrzeug oder eine Getriebepumpe für eine Vorrichtung zur Erzeugung von Energie, beispielsweise eine Windkraftturbine, ist.

18. Pumpe nach einem der Ansprüche 12 bis 17, **dadurch gekennzeichnet, dass** die Sickendichtung (S) eine Sickendichtung (S) nach einem der Ansprüche 1 bis 11 ist, wobei die erste Versteifungsstruktur (24) in der axialen Sicht bei Abdichtung des Auslasses (8) mit dem Auslass (8) und bei Abdichtung der Förderkammer (5) mit der Förderkammer (5) überlappt, so dass die erste Versteifungsstruktur (24) im Betrieb der Pumpe vom Fluid angeströmt wird.
